(19) **Europäisches Patentamt / European Patent Office / Office européen des brevets**

(11) **EP 4 582 197 A1**

(12) **EUROPEAN PATENT APPLICATION**
published in accordance with Art. 153(4) EPC

(43) Date of publication:
09.07.2025 Bulletin 2025/28

(21) Application number: 23860551.3

(22) Date of filing: 01.09.2023

(51) International Patent Classification (IPC):
$B22F\ 5/10^{(2006.01)}$  $B22F\ 1/00^{(2022.01)}$
$B22F\ 3/11^{(2006.01)}$  $B22F\ 5/00^{(2006.01)}$
$B22F\ 10/10^{(2021.01)}$  $C25B\ 1/04^{(2021.01)}$
$C25B\ 9/00^{(2021.01)}$  $C25B\ 11/03^{(2021.01)}$
$C25B\ 11/042^{(2021.01)}$  $C25B\ 11/046^{(2021.01)}$
$H01G\ 9/052^{(2006.01)}$  $H01G\ 11/68^{(2013.01)}$
$H01G\ 11/70^{(2013.01)}$  $H01M\ 4/02^{(2006.01)}$
$H01M\ 4/13^{(2010.01)}$  $H01M\ 4/66^{(2006.01)}$
$H01M\ 4/80^{(2006.01)}$  $H01M\ 4/86^{(2006.01)}$
$H01M\ 8/0232^{(2016.01)}$  $H01M\ 8/10^{(2016.01)}$

(52) Cooperative Patent Classification (CPC):
B22F 1/00; B22F 3/11; B22F 5/00; B22F 5/10;
B22F 10/10; C25B 1/04; C25B 9/00; C25B 11/03;
C25B 11/042; C25B 11/046; H01G 9/052;
H01G 11/68; H01G 11/70; H01M 4/02; H01M 4/13;
(Cont.)

(86) International application number:
PCT/JP2023/032127

(87) International publication number:
WO 2024/048791 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.09.2022  JP 2022139721
02.09.2022  JP 2022139722
02.09.2022  JP 2022140184
02.09.2022  JP 2022140190

(71) Applicants:
• Mitsubishi Materials Corporation
Tokyo 100-8117 (JP)
• NATIONAL UNIVERSITY CORPORATION
YOKOHAMA NATIONAL UNIVERSITY
Yokohama-shi
Kanagawa 240-8501 (JP)

(72) Inventors:
• SANO, Yosuke
Saitama-shi, Saitama 330-8508 (JP)
• OHMORI, Shinichi
Saitama-shi, Saitama 330-8508 (JP)
• KATO, Jun
Saitama-shi, Saitama 330-8508 (JP)
• MITSUSHIMA, Shigenori
Yokohama-shi, Kanagawa 240-8501 (JP)
• KURODA, Yoshiyuki
Yokohama-shi, Kanagawa 240-8501 (JP)
• NAGASAWA, Kensaku
Yokohama-shi, Kanagawa 240-8501 (JP)

(74) Representative: Gille Hrabal
Partnerschaftsgesellschaft mbB
Patentanwälte
Brucknerstraße 20
40593 Düsseldorf (DE)

(54) **METAL MEMBER HAVING THREE-DIMENSIONAL REGULAR SKELETON STRUCTURE, ELECTRODE HAVING THREE-DIMENSIONAL REGULAR SKELETON, WATER ELECTROLYSIS APPARATUS, AND FUEL CELL**

(57) This metal member is a metal member having a three-dimensional regular framework structure with a porosity in a range of 50% or more and 95% or less, wherein the three-dimensional regular framework structure has a framework and a plurality of pores extending in a first direction, in a cross section perpendicular to the

**(Cont. next page)**

EP 4 582 197 A1

first direction, pore rows in which the pores and the frameworks are alternately arranged are periodically laminated to form a lamination structure. In addition, the electrode has a well-shaped sheet layer having a plurality of through-holes in a thickness direction, the porosity of the well-shaped sheet layer is in a range of 20% or more and 70% or less, and the thickness of the well-shaped sheet layer is in a range of 10 $\mu$m or more and 500 $\mu$m or less.

## FIG. 1

(52) Cooperative Patent Classification (CPC): (Cont.)
**H01M 4/66; H01M 4/80; H01M 4/86; H01M 8/0232; H01M 8/10;** Y02E 60/50

**Description**

TECHNICAL FIELD

The present invention relates to a metal member having a three-dimensional regular framework structure, an electrode having a three-dimensional regular framework, a water electrolysis device, and a fuel cell.

Priority is claimed on Japanese Patent Application No. 2022-139721, filed September 2, 2022, Japanese Patent Application No. 2022-139722, filed September 2, 2022, Japanese Patent Application No. 2022-140184, filed September 2, 2022, and Japanese Patent Application No. 2022-140190, filed September 2, 2022, the contents of which are incorporated herein by reference.

BACKGROUND ART

Conventionally, for example, porous components made of metals such as copper, aluminum, titanium, and stainless steel are used in electrodes and current collectors in various batteries, heat exchanger members, sound attenuation members, filter members, and shock absorbing members.

For example, in the case of lithium-ion batteries, when a porous aluminum component is used for a positive electrode current collector, it is expected that the filling density of the positive electrode active material will be maximized and uniform current collection from all active material will be possible, which would result in a higher battery output. Examples of porous components include Celmet (registered trademark, commercially available from Sumitomo Electric Industries, Ltd.). However, this porous component has a random pore structure, and thus it is difficult to fill the inside of the porous component with an activating substance.

In addition, in water electrolysis methods using a solid polymer electrolytic cell, a porous titanium electrode is used as an anode electrode. The anode has a function of electrolyzing liquid water as a raw material and producing oxygen gas. In order to achieve high electrolysis efficiency, it is important that the gas be discharged quickly. As the titanium porous electrode, for example, as described in Patent Documents 1 and 2, a titanium fiber sintered component or a particle sintered component obtained by a foaming method is used.

However, in the above porous metal component, since pores are arranged randomly, there is a risk of a gas not escaping easily and electrolysis efficiency decreasing.

In addition, in order to realize a $CO_2$-free society, renewable energy such as solar and wind energy has been focused on as an alternative to fossil energy for a long time. However, there are many challenges to further spreading of renewable energy, including (1) a method of transporting energy from energy supply areas such as huge solar and wind power generation facilities to urban areas, which are energy consumption areas, and (2) surplus electricity that cannot be put into power grids and power losses due to a time difference between peak electricity demand and peak supply. As a solution for this challenge, a method of converting electrical energy obtained from surplus renewable energy into chemical energy (compound) using a water electrolysis device and using it as an alternative to fossil energy has been examined. Hydrogen and methylcyclohexane are well-known examples of such compounds.

The anode of the water electrolysis device requires a flow path structure for efficiently supplying liquid water as a raw material to a catalyst, and a power supply component for supplying a current for electrolysis. The flow path structure is generally formed of a Pt-plated titanium plate with grooves. Titanium is difficult to machine, which leads to high costs.

As the power supply component, for example, as disclosed in Patent Document 5, an electrode having a through-hole provided in a vertical (Z-axis) direction of a flat plate has been developed.

However, in the electrode disclosed in Patent Document 5, since it is difficult to supply water in the XY plane direction, a flow path structure for supplying water to the electrode is required.

In order to increase the efficiency of the water electrolysis device, it is important to increase the three-phase interface area between the electrode, catalyst, and ion conductor. Since a general catalyst layer has a planar structure, it is desirable to use a flat electrode in order to increase the number of three-phase interfaces. However, for example, in the anode of the water electrolysis device, oxygen bubbles produced by water electrolysis cover the three-phase interface, and thus supply of water as a raw material is inhibited, and the resistance increases. In order to efficiently remove oxygen bubbles from the three-phase interface, it is desirable to use a highly porous metal component as an electrode. Electrode structures that can improve the trade-off relationship between maximizing the area of the three-phase interface and promoting release of bubbles and improve the electrolysis efficiency have been developed.

As the electrode, for example, as disclosed in Patent Document 5, an electrode having dense through-holes provided in a flat plate has been developed. This structure has a large contact area with the catalyst layer and a wide three-phase interface, but has poor bubble removal properties.

In addition, Patent Document 1 proposes an electrode prepared by sintering titanium particles, but there is a problem with bubble removal properties.

As a method for solving this problem, in recent years, laminate forming technologies using a metal powder as a raw material have been focused on.

For example, Patent Documents 3 and 4 disclose technologies for developing separators for fuel cells by melting a metal powder and laminate forming using an electron beam as an energy source.

Citation List

Patent Document

Patent Document 1: Japanese Patent No. 6485967
Patent Document 2: Japanese Unexamined Patent Application, First Publication No. 2006-138005
Patent Document 3: Japanese Unexamined Patent Application, First Publication No. 2021-108250
Patent Document 4: Japanese Unexamined Patent Application, First Publication No. 2021-108251
Patent Document 5: Japanese Unexamined Patent Application, First Publication No. 2019-137891

SUMMARY OF INVENTION

Technical Problem

However, as described in Patent Documents 3 and 4, when an electron beam or laser is used as an energy source, it is difficult to control the melting range of the metal powder raw material, and it is not possible to form pores with high accuracy. Particularly, it is very difficult to periodically form pores with a relatively small diameter of the order of 100 $\mu$m. Therefore, it has not been possible to produce a porous metal component with a high porosity and a low pressure loss of a fluid.

In addition, the porous metal component is required to have a large amount of strain when pressurized and a low contact resistance with other members.

On the other hand, in the electrode of the electrolysis device, the pore size of the porous component is important. When the pore size of the electrode is too large, the contact resistance with other members such as the catalyst layer increases, and the electrolysis efficiency decreases. On the other hand, when the pore size of the electrode is too small, bubbles are not easily removed, and the electrolysis efficiency also decreases.

Here, as described in Patent Documents 3 and 4, when an electron beam or laser is used as an energy source, it is difficult to control the melting range of the metal powder raw material, and particularly, it is very difficult to periodically form pores with a relatively small diameter of the order of 100 $\mu$m, which are important for the electrode.

The present invention has been made in view of the above circumstances and, and an object of the present invention is to provide a metal member having a three-dimensional regular framework structure with a high porosity and a low pressure loss for a fluid that passes therethrough or a metal member having a three-dimensional regular framework structure with a high porosity, a low pressure loss for a fluid that passes therethrough, a large amount of strain when pressurized, and a low contact resistance with other members, and a water electrolysis device and a fuel cell including an electrode formed of this metal member having a three-dimensional regular framework structure.

In addition, the present invention has been made in view of the above circumstances, and an object of the present invention is to provide an electrode having a three-dimensional regular framework which has a low contact resistance with other members such as a catalyst layer, allows bubbles to be easily removed, and has excellent electrolysis efficiency, and a water electrolysis device and a fuel cell including the electrode having a three-dimensional regular framework structure.

Solution to Problem

[First aspect]

In order to solve such problems and achieve the above object, a metal member having a three-dimensional regular framework structure according to a first aspect of the present invention has the following configuration.

(1) A metal member having a three-dimensional regular framework structure of the present invention is a metal member having a three-dimensional regular framework structure with a porosity in a range of 50% or more and 95% or less, wherein the three-dimensional regular framework structure has a framework and a plurality of pores extending in a first direction, in a cross section perpendicular to the first direction, pore rows in which the pores and the frameworks are alternately arranged are periodically laminated to form a lamination structure, and in the pore rows adjacent to each other in a lamination direction, the phases of the pores and the frameworks match.

According to the metal member having a three-dimensional regular framework structure of the present invention, since the three-dimensional regular framework structure with a porosity in a range of 50% or more and 95% or less is formed, the porosity is sufficiently high, the fluid can flow through the pores, and active materials and the like can be introduced into the metal member. In addition, since the porosity is 95% or less, strength can be secured.

In addition, the metal member having a three-dimensional regular framework structure has a plurality of pores extending in a first direction, and in a cross section perpendicular to the first direction, since pore rows in which the pores and the frameworks are alternately arranged are periodically laminated to form a lamination structure, it is possible to significantly reduce the pressure loss of the fluid in the first direction. In addition, active materials and the like can be easily introduced into the metal member having a three-dimensional regular framework structure.

In addition, in the pore rows adjacent to each other in a lamination direction, since the phases of the pores and the frameworks match, the flow of the flowing fluid can be stabilized, and the pressure loss of the fluid in the first direction can be further reduced.

(2) A metal member having a three-dimensional regular framework structure of the present invention is the metal member having a three-dimensional regular framework structure according to (1), wherein, in a cross section perpendicular to the first direction, the circle-equivalent diameter of the pores is in a range of 50 $\mu$m or more and 1,500 $\mu$m or less.

According to the metal member having a three-dimensional regular framework structure of the present invention, in a cross section perpendicular to the first direction, since the circle-equivalent diameter of the pores is in a range of 50 $\mu$m or more and 1,500 $\mu$m or less and the porosity is in a range of 50% or more and 95% or less, there are many pores with a relatively small opening diameter, which makes it possible to further reduce the pressure loss of the fluid in the first direction and allows active materials and the like to be introduced into the metal member.

(3) A metal member having a three-dimensional regular framework structure of the present invention is the metal member having a three-dimensional regular framework structure according to (1) or (2), wherein, in a cross section perpendicular to the first direction, the circle-equivalent diameter of the framework is in a range of 50 $\mu$m or more and 200 $\mu$m or less.

According to the metal member having a three-dimensional regular framework structure of the present invention, in a cross section perpendicular to the first direction, the circle-equivalent diameter of the framework is in a range of 50 $\mu$m or more and 200 $\mu$m or less, even if the porosity is relatively high, strength can be secured.

(4) A metal member having a three-dimensional regular framework structure of the present invention is the metal member having a three-dimensional regular framework structure according to any one of (1) to (3), wherein, in a cross section perpendicular to the first direction, the framework pitch in the pore rows is in a range of 100 $\mu$m or more and 1,500 $\mu$m or less.

According to the metal member having a three-dimensional regular framework structure of the present invention, since the framework pitch in the pore rows is in a range of 100 $\mu$m or more and 1,500 $\mu$m or less, even if the porosity is relatively high, sufficient strength can be secured.

(5) A metal member having a three-dimensional regular framework structure of the present invention is the metal member having a three-dimensional regular framework structure according to any one of (1) to (4), wherein the air pressure loss in the first direction is 30,000 Pa or less.

According to the metal member having a three-dimensional regular framework structure of the present invention, since the air pressure loss in the first direction is 30,000 Pa or less, it is possible to reliably reduce the pressure loss of the fluid in the pore extension direction.

(6) A metal member having a three-dimensional regular framework structure of the present invention is the metal member having a three-dimensional regular framework structure according to any one of (1) to (5), wherein the metal member is formed of any one metal selected from a group consisting of aluminum or an aluminum alloy, copper or a copper alloy, stainless steel, and titanium or a titanium alloy.

Since the metal member having a three-dimensional regular framework structure of the present invention is formed of any one metal selected from the group consisting of aluminum or an aluminum alloy, copper or a copper alloy, stainless steel, and titanium or a titanium alloy, it is possible to provide a metal member having a three-dimensional regular framework structure that satisfies required characteristics such as electrical conductivity and corrosion resistance.

(7) A water electrolysis device of the present invention including an electrode composed of the metal member having the three-dimensional regular framework structure according to any one of (1) to (6).

Since the water electrolysis device of the present invention includes an electrode composed of the above metal member having a three-dimensional regular framework structure, the fluid can flow through the pores, active materials and the like can be introduced into the metal member, and the water electrolysis device can be operated efficiently and stably.

(8) A fuel cell of the present invention includes an electrode composed of the metal member having a three-dimensional regular framework structure according to any one of (1) to (6).

Since the fuel cell of the present invention includes an electrode composed of the above metal member having a three-dimensional regular framework structure, the fluid can flow through the pores, active materials and the like can be introduced into the metal member, and the fuel cell can be operated efficiently and stably.

[Second aspect]

A metal member having a three-dimensional regular framework structure according to a second aspect of the present invention has the following configuration. (11) A metal member having a three-dimensional regular framework structure of the present invention with a porosity in a range of 50% or more and 95% or less, wherein the three-dimensional regular framework structure has a framework and a plurality of pores extending in a first direction, in a cross section perpendicular to the first direction, pore rows in which the pores and the frameworks are alternately arranged are periodically laminated to form a lamination structure, and in the pore rows adjacent to each other in a lamination direction, the phases of the pores and the frameworks are shifted.

According to the metal member having a three-dimensional regular framework structure of the present invention, since the three-dimensional regular framework structure with a porosity in a range of 50% or more and 95% or less is formed, the porosity is sufficiently high, the fluid can flow through the pores, and active materials and the like can be introduced into the metal member.

In addition, the metal member having a three-dimensional regular framework structure has a plurality of pores extending in a first direction, and in a cross section perpendicular to the first direction, since pore rows in which the pores and the frameworks are alternately arranged are periodically laminated to form a lamination structure, it is possible to significantly reduce the pressure loss of the fluid in the first direction. In addition, active materials and the like can be easily introduced into the metal member having a three-dimensional regular framework structure.

In addition, in the pore rows adjacent to each other in a lamination direction, since the phases of the pores and the frameworks are shifted, the Young's modulus is small. The metal member can deform according to the shape of the surrounding members during compression, and electrical resistance and thermal resistance due to contact can be reduced.

(12) A metal member having a three-dimensional regular framework structure of the present invention is the metal member having a three-dimensional regular framework structure according to (11), wherein the phase shift is in a range of $\pi/4$ or more and $3\pi/4$ or less.

According to the metal member having a three-dimensional regular framework structure of the present invention, since the phase shift between the pores and the framework in the pore rows adjacent to each other in the lamination direction is in a range of $\pi/4$ or more and $3\pi/4$ or less, the Young's modulus is small, the metal member can deform according to the shape of the surrounding members during compression, and electrical resistance and thermal resistance due to contact can be reduced.

(13) A metal member having a three-dimensional regular framework structure of the present invention is the metal member having a three-dimensional regular framework structure according to (11) or (12), wherein, in a cross section perpendicular to the first direction, the circle-equivalent diameter of the pores is in a range of 50 $\mu$m or more and 1,500 $\mu$m or less.

According to the metal member having a three-dimensional regular framework structure of the present invention, in a cross section perpendicular to the first direction, since the circle-equivalent diameter of the pores is in a range of 50 $\mu$m or more and 1,500 $\mu$m or less and the porosity is in a range of 50% or more and 95% or less, there are many pores with a relatively small opening diameter, which makes it possible to further reduce the pressure loss of the fluid in the first direction and allows active materials and the like to be introduced into the metal member.

(14) A metal member having a three-dimensional regular framework structure of the present invention is the metal member having a three-dimensional regular framework structure according to any one of (11) to (13), wherein, in a cross section perpendicular to the first direction, the circle-equivalent diameter of the framework is in a range of 50 $\mu$m or more and 200 $\mu$m or less.

According to the metal member having a three-dimensional regular framework structure of the present invention, in a cross section perpendicular to the first direction, since the circle-equivalent diameter of the framework is in a range of 50 $\mu$m or more and 200 $\mu$m or less, even if the porosity is relatively high, strength can be secured.

(15) A metal member having a three-dimensional regular framework structure of the present invention is the metal member having a three-dimensional regular framework structure according to any one of (11) to (14), wherein, in a cross section perpendicular to the first direction, the framework pitch in the pore rows is in a range of 100 $\mu$m or more and 1,500 $\mu$m or less.

According to the metal member having a three-dimensional regular framework structure of the present invention, since the framework pitch in the pore rows is in a range of 100 $\mu$m or more and 1,500 $\mu$m or less, even if the porosity is relatively high, sufficient strength can be secured.

(16) A metal member having a three-dimensional regular framework structure of the present invention is the metal member having a three-dimensional regular framework structure according to any one of (11) to (15), the air pressure loss in the first direction is 30,000 Pa or less.

According to the metal member having a three-dimensional regular framework structure of the present invention, since the air pressure loss in the first direction is 30,000 Pa or less, it is possible to reliably reduce the pressure loss of the fluid in the first direction.

(17) A metal member having a three-dimensional regular framework structure of the present invention is the metal member having a three-dimensional regular framework structure according to any one of (11) to (16), wherein the amount of strain when pressurized at 4 MPa is 1.0% or more.

According to the metal member having a three-dimensional regular framework structure of the present invention, since the amount of strain when pressurized at 4 MPa is 1.0% or more, the metal member deforms according to the shape of the surrounding members during compression, and the contact resistance with other members can be sufficiently minimized.

(18) A metal member having a three-dimensional regular framework structure of the present invention is the metal member having a three-dimensional regular framework structure according to any one of (11) to (17), wherein the metal member is formed of any one metal selected from a group consisting of aluminum or an aluminum alloy, copper or a copper alloy, stainless steel, and titanium or a titanium alloy.

Since the metal member having a three-dimensional regular framework structure of the present invention is formed of any one metal selected from the group consisting of aluminum or an aluminum alloy, copper or a copper alloy, stainless steel, and titanium or a titanium alloy, it is possible to provide a metal member having a three-dimensional regular framework structure that satisfies required characteristics such as electrical conductivity and corrosion resistance.

(19) A water electrolysis device of the present invention includes an electrode composed of the metal member having the three-dimensional regular framework structure according to any one of (11) to (18).

Since the water electrolysis device of the present invention includes an electrode composed of the above metal member having a three-dimensional regular framework structure, the fluid can flow through the pores, the contact resistance with other members can be reduced, and the water electrolysis device can be operated efficiently and stably.

(20) A fuel cell of the present invention includes an electrode composed of the metal member having a three-dimensional regular framework structure according to any one of (11) to (18).

Since the fuel cell of the present invention includes an electrode composed of the above metal member having a three-dimensional regular framework structure, the fluid can flow through the pores, the contact resistance with other members can be reduced, and the fuel cell can be operated efficiently and stably.

[Third aspect]

An electrode having a three-dimensional regular framework according to a third aspect of the present invention has the following configuration.

(21) An electrode having a three-dimensional regular framework of the present invention, includes a well-shaped sheet layer having a plurality of through-holes in a thickness direction and a pin structure layer composed of a plurality of pin members erected from the well-shaped sheet layer, wherein the porosity of the well-shaped sheet layer is in a range of 20% or more and 70% or less, and the porosity of the pin structure layer is in a range of 70% or more and 99% or less, and the thickness of the well-shaped sheet layer is in a range of 10 $\mu$m or more and 500 $\mu$m or less, and the thickness of the pin structure layer is in a range of 100 $\mu$m or more and 5,000 $\mu$m or less.

Since the electrode having a three-dimensional regular framework of the present invention includes a well-shaped sheet layer having a plurality of through-holes in a thickness direction and a pin structure layer composed of a plurality of pin members erected from the well-shaped sheet layer, the flow path structure and the power supply component structure are integrated, the contact resistance is reduced, bubbles are easily removed, and the electrolysis efficiency can be significantly improved.

In addition, since the thickness of the well-shaped sheet layer is in a range of 10 $\mu$m or more and 500 $\mu$m or less, strength for supporting the pin structure layer can be secured, and bubbles can be easily removed. In addition, since the thickness of the pin structure layer is in a range of 100 $\mu$m or more and 5,000 $\mu$m or less, bubbles can be easily removed from the well-shaped sheet layer and the pin structure layer.

In addition, since the porosity of the well-shaped sheet layer is in a range of 20% or more and 70% or less, an area for supporting the pin structure layer can be secured, and bubbles can be easily removed. In addition, since the porosity of the pin structure layer is in a range of 70% or more and 99% or less, the strength of the pin structure layer can be secured, and bubbles can be easily removed from the pin structure layer.

(22) An electrode having a three-dimensional regular framework of the present invention is the electrode having a three-dimensional regular framework according to (21), wherein the framework diameter is in a range of 50 $\mu$m or more and 300 $\mu$m or less, and the number of pin members per unit area in the pin structure layer is in a range of 10/cm$^2$ or more and 1,000/cm$^2$ or less.

According to the electrode having a three-dimensional regular framework of the present invention, since the framework diameter is in a range of 50 $\mu$m or more and 300 $\mu$m or less, sufficient strength can be secured, a fine periodic structure is formed, and a contact area with other members such as a catalyst can be secured.

In addition, in the pin structure layer, since the number of pin members per unit area is in a range of 10/cm$^2$ or more and 1,000/cm$^2$ or less, the strength of the pin structure layer can be secured, and bubbles can be more easily removed from the pin structure layer.

(23) An electrode having a three-dimensional regular framework of the present invention is the electrode having a three-dimensional regular framework according to (21) or (22), wherein the electrode is formed of any one metal selected from a group consisting of aluminum or an aluminum alloy, copper or a copper alloy, stainless steel, and titanium or a titanium alloy.

Since the electrode having a three-dimensional regular framework of the present invention is formed of any one metal selected from the group consisting of aluminum or an aluminum alloy, copper or a copper alloy, stainless steel, and titanium or a titanium alloy, it is possible to provide an electrode having a three-dimensional regular framework that satisfies required characteristics such as electrical conductivity and corrosion resistance.

(24) An electrode having a three-dimensional regular framework of the present invention is the electrode having a three-dimensional regular framework according to any one of (21) to (23), wherein the current density during water electrolysis is 5.0 A/cm$^2$ or more.

According to the electrode having a three-dimensional regular framework of the present invention, since the current density during water electrolysis is 5.0 A/cm$^2$ or more, the electrode has excellent characteristics.

(25) A water electrolysis device of the present invention includes the electrode having a three-dimensional regular framework structure according to any one of (21) to (24).

Since the water electrolysis device of the present invention includes the above electrode having a three-dimensional regular framework structure, the contact resistance with other members is reduced, bubbles are easily removed, and the water electrolysis device can be operated efficiently and stably.

(26) A fuel cell of the present invention includes the electrode having a three-dimensional regular framework structure according to any one of (21) to (24).

Since the fuel cell of the present invention includes the above electrode having a three-dimensional regular framework structure, the contact resistance with other members is reduced, bubbles are easily removed, and the fuel cell can be operated efficiently and stably.

[Fourth aspect]

An electrode having a three-dimensional regular framework according to a fourth aspect of the present invention has the following configuration.

(31) An electrode having a three-dimensional regular framework of the present invention including a well-shaped sheet layer having a plurality of through-holes in a thickness direction and a rectangular parallelepiped lattice layer laminated in the thickness direction of the well-shaped sheet layer, wherein the porosity of the well-shaped sheet layer is in a range of 20% or more and 70% or less, and the porosity of the rectangular parallelepiped lattice layer is in a range of 70% or more and 99% or less, and the thickness of the well-shaped sheet layer is in a range of 10 μm or more and 500 μm or less, and the thickness of the rectangular parallelepiped lattice layer is in a range of 100 μm or more and 5,000 μm or less.

Since the electrode having a three-dimensional regular framework of the present invention includes a well-shaped sheet layer having a plurality of through-holes in a thickness direction and a rectangular parallelepiped lattice layer laminated in the thickness direction of the well-shaped sheet layer, the flow path structure and the power supply component structure are integrated, the contact resistance is reduced, bubbles are easily removed, and the electrolysis efficiency can be significantly improved.

In addition, since the thickness of the well-shaped sheet layer is in a range of 10 μm or more and 500 μm or less, the strength for supporting the rectangular parallelepiped lattice layer can be secured, and bubbles can be easily removed. In addition, since the thickness of the rectangular parallelepiped lattice layer is in a range of 100 μm or more and 5,000 μm or less, bubbles can be easily removed from the well-shaped sheet layer and the rectangular parallelepiped lattice layer.

In addition, since the porosity of the well-shaped sheet layer is in a range of 20% or more and 70% or less, an area for supporting the rectangular parallelepiped lattice layer can be secured, and bubbles can be easily removed. In addition, since the porosity of the rectangular parallelepiped lattice layer is in a range of 70% or more and 99% or less, the strength of the rectangular parallelepiped lattice layer can be secured and bubbles can be easily removed from the rectangular parallelepiped lattice layer.

(32) An electrode having a three-dimensional regular framework of the present invention is the electrode having a three-dimensional regular framework according to (31), wherein, in the rectangular parallelepiped lattice layer, the framework diameter is in a range of 50 μm or more and 1,000 μm or less, and the framework pitch is in a range of 100 μm or more and 5,000 μm or less.

According to the electrode having a three-dimensional regular framework of the present invention, in the rectangular parallelepiped lattice layer, since the framework diameter is in a range of 50 μm or more and 1,000 μm or

less, sufficient strength can be secured, a fine periodic structure is formed, and a contact area with other members such as a catalyst can be secured.

In addition, in the rectangular parallelepiped lattice layer, since the framework pitch is in a range of 100 μm or more and 5,000 μm or less, the strength of the rectangular parallelepiped lattice layer can be secured, and bubbles can be more easily removed from the rectangular parallelepiped lattice layer.

(33) An electrode having a three-dimensional regular framework of the present invention is the electrode having a three-dimensional regular framework according to (31) or (32), wherein the electrode is formed of any one metal selected from the group consisting of aluminum or an aluminum alloy, copper or a copper alloy, stainless steel, and titanium or a titanium alloy.

Since the electrode having a three-dimensional regular framework of the present invention is formed of any one metal selected from the group consisting of aluminum or an aluminum alloy, copper or a copper alloy, stainless steel, and titanium or a titanium alloy, it is possible to provide an electrode having a three-dimensional regular framework that satisfies required characteristics such as electrical conductivity and corrosion resistance.

(34) An electrode having a three-dimensional regular framework of the present invention is the electrode having a three-dimensional regular framework according to any one of (31) to (33), wherein the current density during water electrolysis is 2.5 A/cm$^2$ or more.

According to the electrode having a three-dimensional regular framework of the present invention, since the current density during water electrolysis is 2.5 A/cm$^2$ or more, the electrode has excellent characteristics.

(35) A water electrolysis device of the present invention includes the electrode having a three-dimensional regular framework structure according to any one of (31) to (34).

Since the water electrolysis device of the present invention includes the above electrode having a three-dimensional regular framework structure, the contact resistance with other members is reduced, bubbles are easily removed, and the water electrolysis device can be operated efficiently and stably.

(36) A fuel cell of the present invention includes the electrode having a three-dimensional regular framework structure according to any one of (31) to (34).

Since the fuel cell of the present invention includes the above electrode having a three-dimensional regular framework structure, the contact resistance with other members is reduced, bubbles are easily removed, and the fuel cell can be operated efficiently and stably.

Advantageous Effects of Invention

According to the first aspect of the present invention, it is possible to provide a metal member having a three-dimensional regular framework structure with a high porosity and a low pressure loss for a fluid that passes therethrough, and a water electrolysis device and a fuel cell including an electrode composed of the metal member having a three-dimensional regular framework structure.

According to the second aspect of the present invention, it is possible to provide a metal member having a three-dimensional regular framework structure with a high porosity, a low pressure loss for a fluid that passes therethrough, a large amount of strain when pressurized, and a low contact resistance with other members, and a water electrolysis device and a fuel cell including an electrode composed of the metal member having a three-dimensional regular framework structure.

According to the third aspect and the fourth aspect of the present invention, it is possible to provide an electrode having a three-dimensional regular framework which has a low contact resistance with other members such as a catalyst layer, allows bubbles to be easily removed, and has excellent electrolysis efficiency, and a water electrolysis device and a fuel cell including the electrode having a three-dimensional regular framework structure.

BRIEF DESCRIPTION OF DRAWINGS

[FIG. 1] An explanatory diagram showing an example of a metal member having a three-dimensional regular framework structure according to an embodiment of the present invention.
[FIG. 2] A schematic diagram of a cross section of the metal member having a three-dimensional regular framework structure shown in FIG. 1 perpendicular to a Y-axis direction.
[FIG. 3] An explanatory diagram showing an example of the metal member having a three-dimensional regular framework structure according to the embodiment of the present invention.
[FIG. 4] A schematic diagram of a cross section of the metal member having a three-dimensional regular framework structure shown in FIG. 3 perpendicular to the Y-axis direction.
[FIG. 5] An explanatory diagram showing an example of an electrode having a three-dimensional regular framework according to an embodiment of the present invention.

[FIG. 6] An explanatory diagram showing an example of the electrode having a three-dimensional regular framework according to the embodiment of the present invention.

[FIG. 7] A flow chart showing an example of a method of producing a metal member having a three-dimensional regular framework structure shown in FIG. 1 or FIG. 3.

[FIG. 8] A graph showing an example of a compressive stress-strain curve in an example.

[FIG. 9] A flow chart showing an example of a method of producing an electrode having a three-dimensional regular framework shown in FIG. 5 or FIG. 6.

DESCRIPTION OF EMBODIMENTS

Hereinafter, a metal member having a three-dimensional regular framework structure according to an embodiment of the present invention and an electrode having a three-dimensional regular framework according to an embodiment of the present invention will be described with reference to the appended drawings.

[Metal member according to first embodiment]

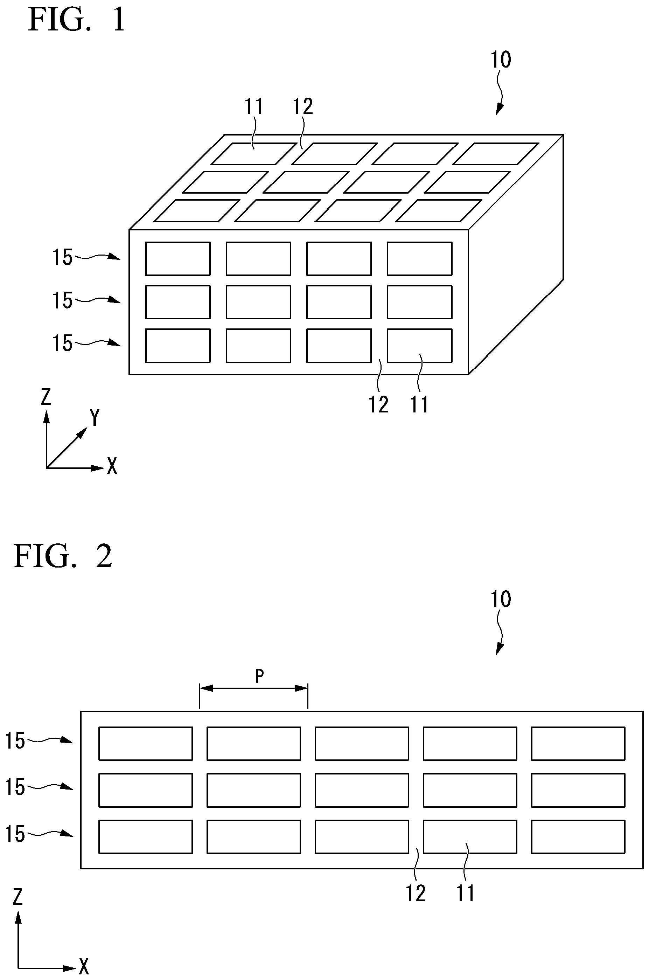

FIG. 1 and FIG. 2 show a metal member having a three-dimensional regular framework structure according to the present embodiment.

A metal member 10 having a three-dimensional regular framework structure according to the present embodiment is used, for example, as an electrically conductive member such as a cathode electrode of a polymer electrolyte fuel cell (PEFC), an anode electrode of a water electrolysis device, or an electrode material for a lithium-ion battery or a lithium-ion capacitor.

The metal member 10 having a three-dimensional regular framework structure according to the present embodiment has a three-dimensional regular framework structure with a porosity N in a range of 50% or more and 95% or less, and as shown in FIG. 1 and FIG. 2, the framework structure has a plurality of pores 11 extending in a first direction, and in a cross section perpendicular to the first direction (extension direction of the pores 11), pore rows 15 in which pores 11 and frameworks 12 are alternately arranged are laminated to form a structure.

In addition, in the pore rows 15 adjacent to each other in the lamination direction, the phases of the pores 11 and the frameworks 12 match.

Here, the porosity N of the metal member 10 having a three-dimensional regular framework structure is calculated by the following formula.

$$N(\%)=(1-(W/(V \times D_T))) \times 100$$

W: mass (g) of the metal member 10 having a three-dimensional regular framework structure

V: volume (cm$^3$) of the metal member 10 having a three-dimensional regular framework structure

$D_T$: true density (g/cm$^3$) of the metal constituting the metal member 10 having a three-dimensional regular framework structure

In the present embodiment, as shown in FIG. 1, the metal member 10 having a three-dimensional regular framework structure has a roughly rectangular parallelepiped shape, and has the plurality of pores 11 extending in the Y-axis direction and the Z-axis direction.

Here, FIG. 2 shows a cross section of the metal member 10 having a three-dimensional regular framework structure perpendicular to the Y-axis direction. As shown in FIG. 2, the metal member 10 having a three-dimensional regular framework structure has a structure in which the pore rows 15 in which the pores 11 and the frameworks 12 are alternately arranged in the X-axis direction, and the pore rows 15 are laminated in the Z-axis direction.

In addition, in the pore rows 15 adjacent to each other in the lamination direction (Z-axis direction), the phases of the pores 11 and the frameworks 12 in the X-axis direction match.

Here, when the phases of the pores 11 and the frameworks 12 match, this means that, in the X-Z plane perpendicular to the Y-axis direction, the pores 11 and the frameworks 12 are alternately arranged in the Z-axis direction, and the pores 11 and the frameworks 12 adjacent to each other in the Z-axis direction may be arranged alternately and repeatedly with the same period in the X-axis direction, that is, at the same intervals and at the same positions.

More preferably, the intervals between adjacent pores 11 and the intervals between adjacent frameworks 12 may be repeated at the same period in any of the X-axis direction, the Y-axis direction, and the Z-axis direction of the metal member 10.

In the metal member 10 having a three-dimensional regular framework structure according to the present embodiment, as shown in FIG. 2, in the cross section perpendicular to the first direction (Y-axis direction), the circle-equivalent diameter of the pore 11 is preferably in a range of 50 μm or more and 1,500 μm or less.

Here, in the present embodiment, as shown in FIG. 2, the cross section perpendicular to the first direction (Y-axis direction) has a rectangular shape, and the circle-equivalent diameter determined from the cross-sectional area of the pore 11 is preferably in the above range. In addition, the width (length in the X-axis direction) of the rectangular pore 11 is preferably in a range of 100 μm or more and 1,500 μm or less, and the height (length in the Z-axis direction) of the rectangular pore 11 is preferably in a range of 100 μm or more and 1,500 μm or less.

In addition, in the metal member 10 having a three-dimensional regular framework structure according to the present embodiment, as shown in FIG. 2, in the cross section (X-Z plane) perpendicular to the first direction (Y-axis direction), the circle-equivalent diameter of the framework 12 is preferably in a range of 50 μm or more and 200 μm or less.

Here, in the present embodiment, as shown in FIG. 2, in the cross section perpendicular to the first direction (Y-axis direction), the framework 12 has a rectangular shape, and the circle-equivalent diameter determined from the cross-sectional area of the framework 12 is preferably in the above range. In addition, the width (length in the X-axis direction) of the rectangular framework 12 is preferably in a range of 100 μm or more and 1,500 μm or less, and the height (length in the Z-axis direction) of the rectangular framework 12 is preferably in a range of 100 μm or more and 1,500 μm or less.

In addition, in the metal member 10 having a three-dimensional regular framework structure according to the present embodiment, as shown in FIG. 2, in the cross section perpendicular to the first direction (Y-axis direction), the pitch P of the framework 12 in the pore row 15 is preferably in a range of 100 μm or more and 1,500 μm or less.

In addition, in the metal member 10 having a three-dimensional regular framework structure according to the present embodiment, the air pressure loss in the first direction (Y-axis direction) is preferably 30,000 Pa or less.

Here, in the present embodiment, the pressure loss is measured when air is caused to flow in the first direction (Y-axis direction) at a flow rate of 1.0 m/s.

In addition, the metal member 10 having a three-dimensional regular framework structure according to the present embodiment is preferably formed of any one metal selected from the group consisting of aluminum or an aluminum alloy, copper or a copper alloy, stainless steel, and titanium or a titanium alloy.

[Metal member according to second embodiment]

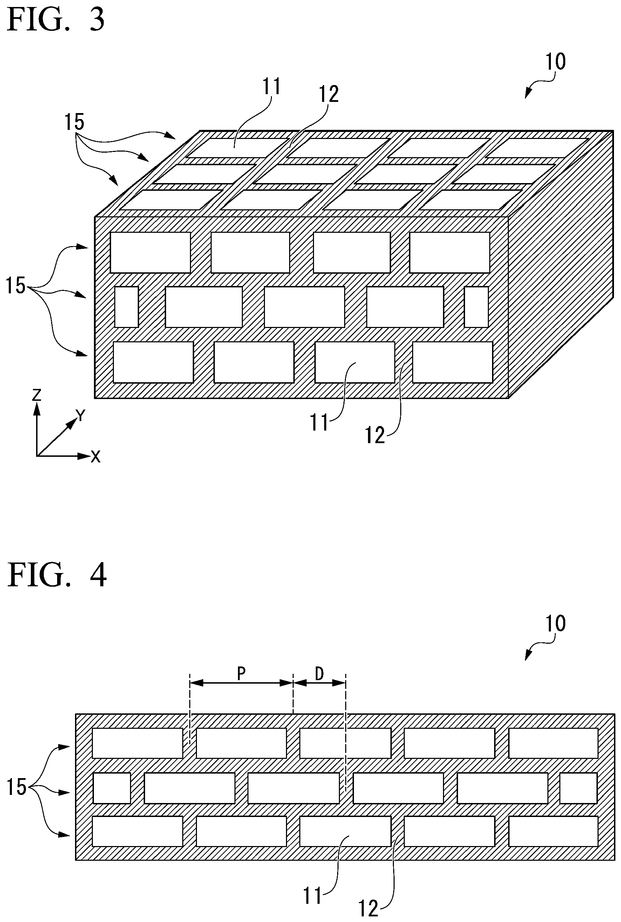

FIG. 3 and FIG. 4 show a metal member having a three-dimensional regular framework structure according to the present embodiment.

The metal member 10 having a three-dimensional regular framework structure according to the present embodiment is used, for example, as an electrically conductive member such as a cathode electrode of a polymer electrolyte fuel cell (PEFC), an anode electrode of a water electrolysis device, or an electrode material for a lithium-ion battery or a lithium-ion capacitor.

The metal member 10 having a three-dimensional regular framework structure according to the present embodiment has a three-dimensional regular framework structure with a porosity N in a range of 50% or more and 95% or less, and as shown in FIG. 3 and FIG. 4, the three-dimensional regular framework structure has the plurality of pores 11 extending in the first direction (Y-axis direction), and in a cross section perpendicular to the first direction, the pore rows 15 in which the pores 11 and the frameworks 12 are alternately arranged are periodically laminated in the Z-axis direction to form a lamination structure.

In addition, in the pore rows 15 adjacent to each other in the lamination direction (Z-axis direction), the phases of the pores 11 and the frameworks 12 are shifted.

Here, when the phases of the pores 11 and the frameworks 12 are shifted, in the X-Z plane perpendicular to the Y-axis direction, the pores 11 and the frameworks 12 are periodically and alternately arranged in the Z-axis direction, but it is preferable that the repeating arrangement positions of the pores 11 and the frameworks 12 adjacent to each other in the Z-axis direction be shifted in the X-axis direction.

Here, the porosity N of the metal member 10 having a three-dimensional regular framework structure is calculated using the same formula as in the first embodiment.

In the present embodiment, as shown in FIG. 3, the metal member 10 having a three-dimensional regular framework structure has a roughly rectangular parallelepiped shape, and has the plurality of pores 11 extending in the Y-axis direction and the Z-axis direction.

Here, FIG. 4 shows a cross section of the metal member 10 having a three-dimensional regular framework structure perpendicular to the Y-axis direction. As shown in FIG. 4, the metal member 10 having a three-dimensional regular framework structure has a structure in which the pore rows 15 in which the pores 11 and the frameworks 12 are alternately arranged in the X-axis direction, and the pore rows 15 are laminated in the Z-axis direction.

In addition, in the pore rows 15 adjacent to each other in the lamination direction (Z-axis direction), the phases of the pores 11 and the frameworks 12 in the X-axis direction are shifted.

In the metal member 10 having a three-dimensional regular framework structure according to the present embodiment, as shown in FIG. 4, in the cross section (X-Z plane) perpendicular to the first direction (Y-axis direction), the phase shift (shift in the X-axis direction) (the period shift in the X-axis direction) D between the pores 11 and the frameworks 12 in the pore rows 15 adjacent to each other in the lamination direction (Z-axis direction) is preferably in a range of $\pi/4$ or more and $3\pi/4$ or less.

In addition, in the metal member 10 having a three-dimensional regular framework structure according to the present embodiment, as shown in FIG. 4, in the cross section perpendicular to the first direction (Y-axis direction), the circle-equivalent diameter of the pore 11 is preferably in a range of 50 $\mu$m or more and 1,500 $\mu$m or less.

Here, in the present embodiment, as shown in FIG. 4, the cross section perpendicular to the first direction (Y-axis direction) has a rectangular shape, and the circle-equivalent diameter determined from the cross-sectional area of the pore 11 is preferably in the above range. In addition, the width (length in the X-axis direction) of the rectangular pore 11 is preferably in a range of 50 $\mu$m or more and 1,500 $\mu$m or less, and the height (length in the Z-axis direction) of the rectangular pore 11 is preferably in a range of 50 $\mu$m or more and 1,500 $\mu$m or less.

In addition, in the metal member 10 having a three-dimensional regular framework structure according to the present embodiment, as shown in FIG. 4, in the cross section perpendicular to the first direction (Y-axis direction), the circle-equivalent diameter of the framework 12 is preferably in a range of 50 $\mu$m or more and 200 $\mu$m or less.

Here, in the present embodiment, as shown in FIG. 4, in the cross section perpendicular to the first direction (Y-axis direction), the framework 12 has a rectangular shape, and the circle-equivalent diameter determined from the cross-sectional area of the framework 12 is preferably in the above range. In addition, the width (length in the X-axis direction) of the rectangular framework 12 is preferably in a range of 50 $\mu$m or more and 200 $\mu$m or less, and the height (length in the Z-axis direction) of the rectangular framework 12 is preferably in a range of 50 $\mu$m or more and 1,500 $\mu$m or less.

In addition, in the metal member 10 having a three-dimensional regular framework structure according to the present embodiment, as shown in FIG. 4, in the cross section perpendicular to the first direction (Y-axis direction), the pitch P of the framework 12 in the pore row 15 is preferably in a range of 100 $\mu$m or more and 1,500 $\mu$m or less.

In addition, in the metal member 10 having a three-dimensional regular framework structure according to the present embodiment, the air pressure loss in the first direction (Y-axis direction) is preferably 30,000 Pa or less. Here, in the present embodiment, the pressure loss is measured when air is caused to flow in the first direction (Y-axis direction) at a flow rate of 1.0 m/s.

In addition, in the metal member 10 having a three-dimensional regular framework structure according to the present embodiment, the amount of strain when pressurized at 4 MPa is preferably 1.0% or more.

In addition, the metal member 10 having a three-dimensional regular framework structure according to the present embodiment is preferably formed of any one metal selected from the group consisting of aluminum or an aluminum alloy, copper or a copper alloy, stainless steel, and titanium or a titanium alloy.

[Method of producing metal member according to first embodiment and second embodiment]

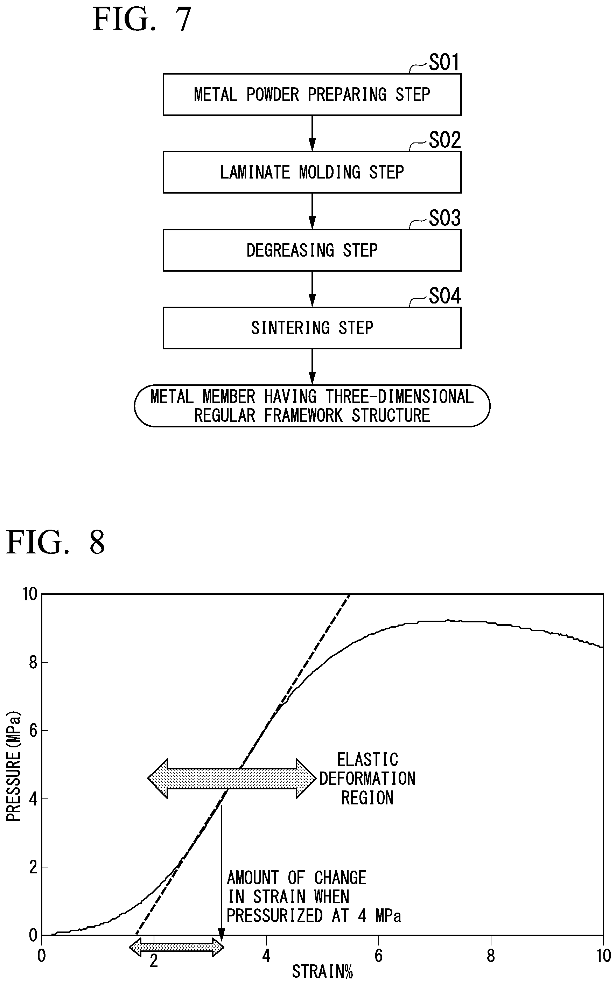

Hereinafter, a method of producing the metal member 10 having a three-dimensional regular framework structure according to the present embodiment will be described with reference to a flow chart in FIG. 7.

(Metal powder preparing step S01)

First, a metal powder composed of a metal constituting the metal member 10 having a three-dimensional regular framework structure is prepared. In the present embodiment, a metal powder formed of any one metal selected from the group consisting of aluminum or an aluminum alloy, copper or a copper alloy, stainless steel, and titanium or a titanium alloy is prepared.

Here, the volume-based average particle size of the metal powder is preferably in a range of 10 $\mu$m or more and 100 $\mu$m or less.

(Laminate molding step S02)

Next, using the above metal powder, a molded component having a three-dimensional regular framework structure is laminated and molded by a binder jet type laminate forming method.

Here, in the binder jet type laminate forming method, since the metal powder does not melt during formation, high-definition forming is possible. Therefore, even with the relatively small pores 11 with a circle-equivalent diameter of 50 $\mu$m or more and 1,500 $\mu$m or less, accurate molding is possible.

In the first embodiment, here, in the pore rows adjacent to each other in the lamination direction (Z-axis direction), lamination and molding are performed so that the phases of the pores and the frameworks in the X-axis direction match.

In the second embodiment, here, in the cross section perpendicular to the first direction (Y-axis direction), lamination and molding are performed so that the phase shift (shift in the X-axis direction) D between the pores and the frameworks in the pore rows adjacent to each other in the lamination direction (Z-axis direction) is in a range of $\pi/4$ or more and $3\pi/4$ or less.

(Degreasing step S03)

Next, the molded component molded by the binder jet type laminate forming method is degreased, and the binder is removed. It is preferable to set degreasing conditions (heating temperature, holding time, etc.) appropriately depending on the binder material used.

(Sintering step S04)

Next, the degreased molded component is sintered. It is preferable to set sintering conditions (atmosphere, sintering temperature, sintering time, etc.) appropriately depending on the metal powder material.

In the sintering step S04, metal powders are sintered together to produce the metal member 10 having a three-dimensional regular framework structure according to the present embodiment.

According to the first embodiment and the metal member 10 having a three-dimensional regular framework structure according to the second embodiment configured as described above, since the three-dimensional regular framework structure with a porosity N in a range of 50% or more and 95% or less is formed, the porosity N is sufficiently high, the fluid can flow through the pores 11, and active materials and the like can be introduced into the metal member. In addition, since the porosity N is 95% or less, strength can be secured.

Here, the porosity N is preferably 60% or more and more preferably 70% or more. On the other hand, the porosity N is preferably 93% or less and more preferably 91% or less.

In addition, the metal member 10 having a three-dimensional regular framework structure has a plurality of pores 11 extending in a first direction, and in a cross section perpendicular to the first direction, since the pore rows 15 in which the pores 11 and the frameworks 12 are alternately arranged are periodically laminated to form a lamination structure, it is possible to significantly reduce the pressure loss of the fluid in the first direction. In addition, active materials and the like can be easily introduced into the metal member 10 having a three-dimensional regular framework structure.

In the first embodiment and in the metal member 10 having a three-dimensional regular framework structure according to the second embodiment, when the circle-equivalent diameter of the pore 11 in a cross section perpendicular to the first direction is in a range of 50 $\mu$m or more and 1,500 $\mu$m or less, since the porosity N is in a range of 50% or more and 95% or less, there are many pores 11 with a relatively small opening diameter, which makes it possible to further reduce the pressure loss of the fluid in the first direction and allows active materials and the like to be introduced into the metal member.

Here, the circle-equivalent diameter of the pore 11 is more preferably 60 $\mu$m or more and still more preferably 70 $\mu$m or more. On the other hand, the circle-equivalent diameter of the pore 11 is more preferably 1,400 $\mu$m or less and still more preferably 1,300 $\mu$m or less.

In addition, in the metal member 10 having a three-dimensional regular framework structure according to the first embodiment and the second embodiment, when the circle-equivalent diameter of the framework 12 in a cross section perpendicular to the first direction is in a range of 50 $\mu$m or more and 200 $\mu$m or less, even if the porosity N is in a range of 50% or more and 95% or less, the strength of the metal member 10 having a three-dimensional regular framework structure can be secured.

Here, the circle-equivalent diameter of the framework 12 is more preferably 60 $\mu$m or more and still more preferably 70 $\mu$m or more. On the other hand, the circle-equivalent diameter of the framework 12 is more preferably 180 $\mu$m or less and still more preferably 160 $\mu$m or less.

In addition, in the metal member 10 having a three-dimensional regular framework structure according to the first embodiment and the second embodiment, in a cross section perpendicular to the first direction, when the pitch P of the framework 12 in the pore row 15 is in a range of 100 $\mu$m or more and 1,500 $\mu$m or less, even if the porosity N is in a range of 50% or more and 95% or less, the strength of the metal member 10 having a three-dimensional regular framework structure can be sufficiently can be secured.

Here, the pitch P of the framework 12 in the pore row 15 is more preferably 120 $\mu$m or more and still more preferably 140 $\mu$m or more. On the other hand, the pitch P of the framework 12 in the pore row 15 is more preferably 1,400 $\mu$m or less and still more preferably 1,300 $\mu$m or less.

In addition, in the metal member 10 having a three-dimensional regular framework structure according to the first embodiment and the second embodiment, since the air pressure loss in the first direction is 30,000 Pa or less, it is possible to reliably reduce the pressure loss of the fluid in the first direction.

Here, the air pressure loss in the first direction is more preferably 25,000 Pa or less and still more preferably 20,000 Pa or less.

In addition, when the metal member 10 having a three-dimensional regular framework structure according to the first embodiment and the second embodiment is formed of any one metal selected from the group consisting of aluminum or an aluminum alloy, copper or a copper alloy, stainless steel, and titanium or a titanium alloy, it is possible to provide the metal member 10 having a three-dimensional regular framework structure that satisfies required characteristics such as electrical conductivity and corrosion resistance.

Here, in the metal member 10 having a three-dimensional regular framework structure according to the first embodiment, in the pore rows 15 adjacent to each other in the lamination direction, since the phases of the pores 11 and the frameworks 12 match, the flow of the flowing fluid can be stabilized, and the pressure loss of the fluid in the first direction can be further reduced.

On the other hand, in the metal member 10 having a three-dimensional regular framework structure according to the second embodiment, in the pore rows 15 adjacent to each other in the lamination direction, since the phases of the pores 11 and the frameworks 12 are shifted, the Young's modulus is small, the metal member can deform according to the shape of the surrounding members during compression, and electrical resistance and thermal resistance due to contact can be reduced.

In the metal member 10 having a three-dimensional regular framework structure according to the second embodiment, when the phase shift D between the pores 11 and the frameworks 12 in the pore rows 15 adjacent to each other in the lamination direction is in a range of $\pi/4$ or more and $3\pi/4$ or less, sufficient strength can be secured even if the porosity N is high.

Here, the phase shift D between the pores 11 and the frameworks 12 in the pore rows 15 adjacent to each other in the lamination direction is more preferably $3\pi/10$ or more and still more preferably $5\pi/16$ or more. On the other hand, the phase shift D between the pores 11 and the frameworks 12 in the pore rows 15 adjacent to each other in the lamination direction is more preferably $7\pi/10$ or less and still more preferably $11\pi/16$ or less.

In addition, in the metal member 10 having a three-dimensional regular framework structure according to the second embodiment, when the amount of strain when pressurized at 4 MPa is 1.0% or more, the metal member deforms according to the shape of the surrounding members during compression, and the contact resistance with other members can be sufficiently minimized.

[Electrode according to third embodiment]

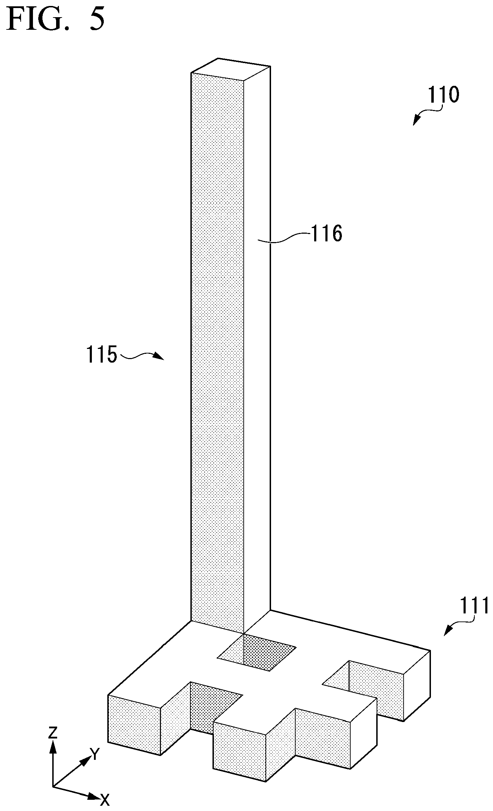

FIG. 5 shows an electrode having a three-dimensional regular framework structure according to the present embodiment.

An electrode 110 having a three-dimensional regular framework according to the present embodiment is used, for example, as a cathode electrode of a polymer electrolyte fuel cell (PEFC), an anode electrode of a water electrolysis device, or an electrode material for a lithium-ion battery or a lithium-ion capacitor.

The electrode 110 having a three-dimensional regular framework according to the present embodiment has a three-dimensional regular framework structure, and as shown in FIG. 5, includes a well-shaped sheet layer 111 having a plurality of through-holes in the thickness direction (Z direction) and a pin structure layer 115 formed by a plurality of pin members 116 erected from the well-shaped sheet layer 111.

The well-shaped sheet layer 111 has a framework with a # shape or a hash shape. The # shape or hash shape is a shape in which at least two lines parallel to a first direction and at least two lines parallel to a second direction crossing the first direction cross each other, and it is more preferable that the first direction and the second direction cross each other perpendicularly. For example, in FIG. 5, in the X-Y plane, two lines parallel to the X direction and two lines parallel to the Y direction perpendicular to the X direction cross each other to form the well-shaped sheet layer 111 with through-holes provided in the thickness direction.

Here, although one pin member 116 is illustrated in FIG. 5, in reality, the pin structure layer 115 is formed by the plurality of pin members 116 erected from the well-shaped sheet layer 111.

In addition, the porosity N1 of the well-shaped sheet layer 111 is in a range of 20% or more and 70% or less, and the thickness t1 (thickness in the Z direction) of the well-shaped sheet layer 111 is in a range of 10 $\mu$m or more and 500 $\mu$m or less.

Here, the porosity N1 of the well-shaped sheet layer 111 is calculated by the following formula.

$$N1(\%)=(1-(W1/(V1 \times D1_T))) \times 100$$

W1: mass (g) of the well-shaped sheet layer 111
V1: volume (cm$^3$) of the well-shaped sheet layer 111
D1$_T$: true density (g/cm$^3$) of the metal constituting the well-shaped sheet layer 111

In addition, the porosity N2 of the pin structure layer 115 is in a range of 70% or more and 99% or less, and the thickness t2 (thickness in the Z direction) of the pin structure layer 115 is in a range of 100 $\mu$m or more and 5,000 $\mu$m or less.

Here, the porosity N2 of the pin structure layer 115 is calculated by the following formula.

$$N2(\%)=(1-(W2/(V2{\times}D2_T)))\times100$$

W2: mass (g) of the pin structure layer 115
V2: volume (cm$^3$) of the pin structure layer 115
D2$_T$: true density (g/cm$^3$) of the metal constituting the pin structure layer 115

Here, in the electrode 110 having a three-dimensional regular framework according to the present embodiment, the framework diameter is preferably in a range of 50 $\mu$m or more and 300 $\mu$m or less.

In addition, in the pin structure layer 115, the number of pin members 116 per unit area is preferably in a range of 10/cm$^2$ or more and 1,000/cm$^2$ or less.

Here, the electrode 110 having a three-dimensional regular framework according to the present embodiment is preferably formed of any one metal selected from the group consisting of aluminum or an aluminum alloy, copper or a copper alloy, stainless steel, and titanium or a titanium alloy.

In addition, in the electrode 110 having a three-dimensional regular framework according to the present embodiment, the current density during water electrolysis is preferably 5.0 A/cm$^2$ or more.

In addition, the inner diameter of the through-hole of the well-shaped sheet layer 111 is preferably in a range of 1 $\mu$m or more and 500 $\mu$m or less.

[Electrode according to fourth embodiment]

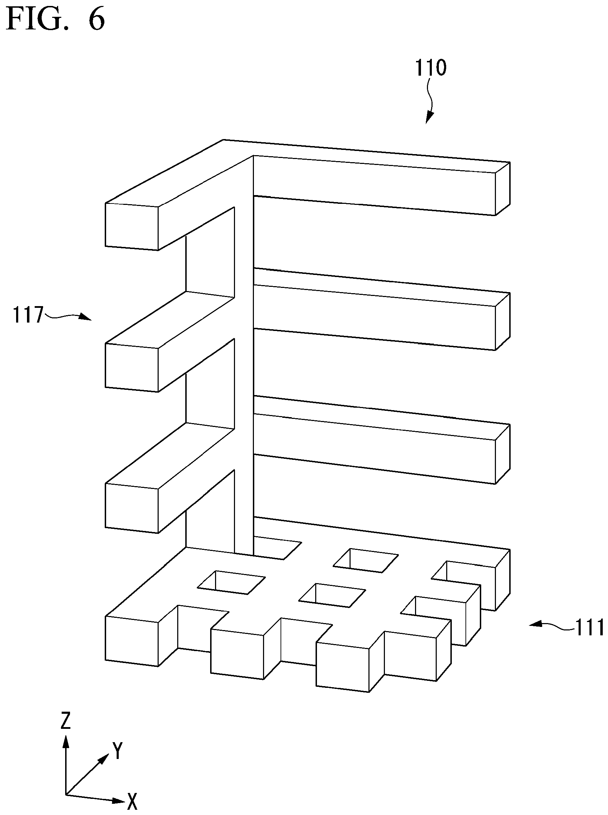

FIG. 6 shows an electrode having a three-dimensional regular framework structure according to the present embodiment.

The electrode 110 having a three-dimensional regular framework according to the present embodiment is used, for example, as a cathode electrode of a polymer electrolyte fuel cell (PEFC), an anode electrode of a water electrolysis device, or an electrode material for a lithium-ion battery or a lithium-ion capacitor.

The electrode 110 having a three-dimensional regular framework according to the present embodiment has a three-dimensional regular framework structure, and as shown in FIG. 6, includes a well-shaped sheet layer 111 having a plurality of through-holes in the thickness direction and a rectangular parallelepiped lattice layer 117 laminated in the thickness direction.

In the present embodiment, as shown in FIG. 6, the well-shaped sheet layer 111 extends along the XY plane, and through-holes penetrating in the Z-axis direction are formed therein.

In addition, in the present embodiment, the rectangular parallelepiped lattice layer 117 has a rectangular framework in the XY plane, and is laminated on the top of the well-shaped sheet layer 111 in the Z-axis direction.

In addition, the porosity N1 of the well-shaped sheet layer 111 is in a range of 20% or more and 70% or less, and the thickness t1 (thickness in the Z direction) of the well-shaped sheet layer 111 is in a range of 10 $\mu$m or more and 500 $\mu$m or less.

Here, the porosity N1 of the well-shaped sheet layer 111 is calculated using the same formula as in the third embodiment.

In addition, the porosity N2 of the rectangular parallelepiped lattice layer 117 is in a range of 70% or more and 99% or less, and the thickness t2 (thickness in the Z direction) of the rectangular parallelepiped lattice layer 117 is in a range of 100 $\mu$m or more and 5,000 $\mu$m or less.

Here, the porosity N2 of the rectangular parallelepiped lattice layer 117 is calculated by the following formula.

$$N2(\%)=(1-(W2/(V2{\times}D2_T)))\times100$$

W2: mass (g) of the rectangular parallelepiped lattice layer 117
V2: volume (cm$^3$) of the rectangular parallelepiped lattice layer 117
D2$_T$: true density (g/cm$^3$) of the metal constituting the rectangular parallelepiped lattice layer 117

Here, in the electrode 110 having a three-dimensional regular framework according to the present embodiment, in the rectangular parallelepiped lattice layer 117, the framework diameter is preferably in a range of 50 $\mu$m or more and 1,000 $\mu$m or less, and the framework pitch is preferably in a range of 100 $\mu$m or more and 5,000 $\mu$m or less.

Here, the electrode 110 having a three-dimensional regular framework according to the present embodiment is preferably formed of any one metal selected from the group consisting of aluminum or an aluminum alloy, stainless steel, and titanium or a titanium alloy.

In addition, in the electrode 110 having a three-dimensional regular framework according to the present embodiment, the current density during water electrolysis is preferably 2.5 A/cm$^2$ or more.

In addition, the inner diameter of the through-hole of the well-shaped sheet layer 111 is preferably in a range of 10 $\mu$m or more and 500 $\mu$m or less.

[Method of producing electrode according to third embodiment and fourth embodiment]

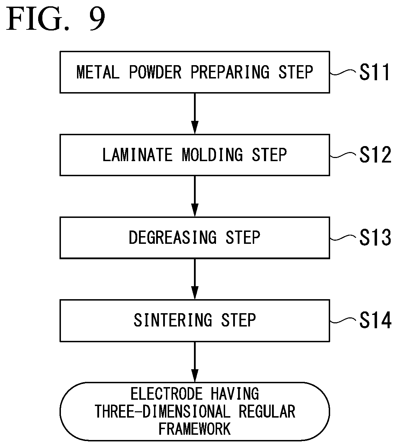

Hereinafter, a method of producing the electrode 110 having a three-dimensional regular framework according to the present embodiment will be described with reference to a flow chart in FIG. 9.

(Metal powder preparing step S11)

First, a metal powder formed of a metal constituting the electrode 110 having a three-dimensional regular framework is prepared. In the present embodiment, a metal powder formed of any one metal selected from the group consisting of aluminum or an aluminum alloy, copper or a copper alloy, stainless steel, and titanium or a titanium alloy is prepared.

Here, the volume-based average particle size of the metal powder is preferably in a range of 10 $\mu$m or more and 100 $\mu$m or less.

(Laminate molding step S12)

Next, using the above molding raw material, a molded component having a porous framework structure (three-dimensional regular framework structure) is laminated and molded by the binder jet type laminate forming method.

Here, in the binder jet type laminate forming method, since the metal powder does not melt during formation, high-definition forming is possible.

(Degreasing step S13)

Next, the molded component molded by the binder jet type laminate forming method is degreased, and the binder is removed. It is preferable to set degreasing conditions (heating temperature, holding time, etc.) appropriately depending on the binder material used.

(Sintering step S14)

Next, the degreased molded component is sintered. It is preferable to set sintering conditions (atmosphere, sintering temperature, sintering time, etc.) appropriately depending on the metal powder material.

In the sintering step S04, metal powders are sintered together to produce the electrode 110 having a three-dimensional regular framework according to the present embodiment.

Since the electrode 110 having a three-dimensional regular framework according to the third embodiment configured as described above includes the well-shaped sheet layer 111 with a plurality of through-holes provided in the thickness direction and the pin structure layer 115 composed of the plurality of pin members 116 erected from the well-shaped sheet layer 11, the flow path structure and the power supply component structure are integrated, the contact resistance with other members is reduced, bubbles are easily removed, and the electrolysis efficiency can be significantly improved.

In addition, since the thickness t1 of the well-shaped sheet layer 111 is 10 $\mu$m or more, strength for supporting the pin structure layer 115 can be secured. On the other hand, since the thickness t2 of the well-shaped sheet layer 111 is 500 $\mu$m or less, bubbles can be easily removed.

Here, the lower limit of the thickness t1 of the well-shaped sheet layer 111 is preferably 20 $\mu$m or more and more preferably 30 $\mu$m or more. On the other hand, the upper limit of the thickness t1 of the well-shaped sheet layer 111 is preferably 400 $\mu$m or less and more preferably 300 $\mu$m or less.

Since the thickness t2 of the pin structure layer 115 is 100 $\mu$m or more, bubbles can be easily removed from the well-shaped sheet layer 111. On the other hand, since the thickness t2 of the pin structure layer 115 is 5,000 $\mu$m or less, bubbles can be easily removed from the pin structure layer 115.

Here, the lower limit of the thickness t2 of the pin structure layer 115 is preferably 150 $\mu$m or more and more preferably 200 $\mu$m or more. On the other hand, the upper limit of the thickness t2 of the pin structure layer 115 is preferably 4,000 $\mu$m or less and more preferably 3,000 $\mu$m or less.

Since the porosity N1 of the well-shaped sheet layer 111 is 20% or more, bubbles can be easily removed from the well-shaped sheet layer 111. On the other hand, since the porosity N1 of the well-shaped sheet layer 111 is 70% or less, an area for supporting the pin structure layer 115 can be secured.

Here, the lower limit of the porosity N1 of the well-shaped sheet layer 111 is preferably 25% or more, and more preferably 30% or more. On the other hand, the upper limit of the porosity N1 of the well-shaped sheet layer 111 is preferably 60% or less, and more preferably 50% or less.

Since the porosity N2 of the pin structure layer 115 is 70% or more, bubbles can be easily removed from the pin structure layer 115. On the other hand, since the porosity N2 of the pin structure layer 115 is 95% or less, the strength of the pin structure layer 115 can be secured.

Here, the lower limit of the porosity N2 of the pin structure layer 115 is preferably 75% or more, and more preferably 80% or more. On the other hand, the upper limit of the porosity N2 of the pin structure layer 115 is preferably 98% or less, and more preferably 97% or less.

In the electrode 110 having a three-dimensional regular framework according to the third embodiment, when the framework diameter is 50 $\mu$m or more, sufficient strength can be secured. On the other hand, when the framework diameter is 300 $\mu$m or less, a fine periodic structure is formed, and a contact area with other members such as a catalyst can be secured.

Here, the lower limit of the framework diameter is more preferably 60 $\mu$m or more and still more preferably 70 $\mu$m or more. On the other hand, the upper limit of the framework diameter is more preferably 280 $\mu$m or less and still more preferably 250 $\mu$m or less.

In the electrode 110 having a three-dimensional regular framework according to the third embodiment, when the number of pin members 116 per unit area in the pin structure layer 115 is 10/cm$^2$ or more, sufficient strength can be secured. On the other hand, when the number of pin members 116 per unit area in the pin structure layer 115 is 1,000/cm$^2$ or less, bubbles can be more easily removed from the pin structure layer 115.

Here, the lower limit of the number of pin members 116 per unit area in the pin structure layer 115 is more preferably 20/cm$^2$ or more and still more preferably 30/cm$^2$ or more. On the other hand, the upper limit of the number of pin members 116 per unit area in the pin structure layer 115 is more preferably 900/cm$^2$ or less and still more preferably 800/cm$^2$ or less.

In addition, the electrode 110 having a three-dimensional regular framework according to the third embodiment is composed of titanium or a titanium alloy, and it is possible to provide an electrode having a three-dimensional regular framework that satisfies required characteristics such as electrical conductivity and corrosion resistance.

In addition, in the electrode 110 having a three-dimensional regular framework according to the third embodiment, when the current density during water electrolysis is 5.0 A/cm$^2$ or more, the electrode has excellent characteristics.

Since the electrode 110 having a three-dimensional regular framework according to the fourth embodiment configured as described above includes the well-shaped sheet layer 111 having a plurality of through-holes in the thickness direction and the rectangular parallelepiped lattice layer 117 laminated in the thickness direction of the well-shaped sheet layer 111, the flow path structure and the power supply component structure are integrated, the contact resistance with other members is reduced, bubbles are easily removed, and the electrolysis efficiency can be significantly improved.

In addition, since the thickness t1 of the well-shaped sheet layer 111 is 10 $\mu$m or more and 500 $\mu$m or less, strength for supporting the rectangular parallelepiped lattice layer 117 can be secured. On the other hand, since the thickness t2 of the well-shaped sheet layer 111 is 500 $\mu$m or less, bubbles can be easily removed.

Here, the lower limit of the thickness t1 of the well-shaped sheet layer 111 is preferably 20 $\mu$m or more and more preferably 30 $\mu$m or more. On the other hand, the upper limit of the thickness t1 of the well-shaped sheet layer 111 is preferably 400 $\mu$m or less and more preferably 300 $\mu$m or less.

Since the thickness t2 of the rectangular parallelepiped lattice layer 117 is 100 $\mu$m or more, bubbles can be easily removed from the well-shaped sheet layer 111. On the other hand, since the thickness t2 of the rectangular parallelepiped lattice layer 117 is 5,000 $\mu$m or less, bubbles can be easily removed from the rectangular parallelepiped lattice layer 117.

Here, the lower limit of the thickness t2 of the rectangular parallelepiped lattice layer 117 is preferably 200 $\mu$m or more and more preferably 300 $\mu$m or more. On the other hand, the upper limit of the thickness t2 of the rectangular parallelepiped lattice layer 117 is preferably 4,000 $\mu$m or less and more preferably 3,000 $\mu$m or less.

Since the porosity N1 of the well-shaped sheet layer 111 is 20% or more, bubbles can be easily removed from the well-shaped sheet layer 111. On the other hand, since the porosity N1 of the well-shaped sheet layer 111 is 70% or less, an area for supporting the rectangular parallelepiped lattice layer 117 can be secured.

Here, the lower limit of the porosity N1 of the well-shaped sheet layer 111 is preferably 25% or more and more preferably 30% or more. On the other hand, the upper limit of the porosity N1 of the well-shaped sheet layer 111 is preferably 60% or less, and more preferably 50% or less.

Since the porosity N2 of the rectangular parallelepiped lattice layer 117 is 70% or more, bubbles can be easily removed from the rectangular parallelepiped lattice layer 117. On the other hand, since the porosity N2 of the rectangular parallelepiped lattice layer 117 is 95% or less, the strength of the rectangular parallelepiped lattice layer 117 can be secured.

Here, the lower limit of the porosity N2 of the rectangular parallelepiped lattice layer 117 is preferably 75% or more and more preferably 80% or more. On the other hand, the upper limit of the porosity N2 of the rectangular parallelepiped lattice layer 117 is preferably 98% or less and more preferably 97% or less.

In the electrode 110 having a three-dimensional regular framework according to the fourth embodiment, when the framework diameter of the rectangular parallelepiped lattice layer 117 is 50 $\mu$m or more, sufficient strength can be secured. On the other hand, when the framework diameter of the rectangular parallelepiped lattice layer 117 is 1,000 $\mu$m or less, a fine periodic structure is formed, and a contact area with other members such as a catalyst can be secured.

Here, the lower limit of the framework diameter is more preferably 60 $\mu$m or more and still more preferably 70 $\mu$m or more. On the other hand, the upper limit of the framework diameter is more preferably 900 $\mu$m or less and still more preferably 800 $\mu$m or less.

In the electrode 110 having a three-dimensional regular framework according to the fourth embodiment, when the framework pitch in the rectangular parallelepiped lattice layer 117 is 100 $\mu$m or more, sufficient strength can be secured. On the other hand, when the framework pitch in the rectangular parallelepiped lattice layer 117 is 5,000 $\mu$m or less, as a fine periodic structure, a contact area with other members can be secured.

Here, the lower limit of the framework pitch in the rectangular parallelepiped lattice layer 117 is more preferably 150 $\mu$m or more and still more preferably 200 $\mu$m or more. On the other hand, the upper limit of the framework pitch in the rectangular parallelepiped lattice layer 117 is more preferably 4,500 $\mu$m or less and still more preferably 4,000 $\mu$m or less.

In addition, when the electrode 110 having a three-dimensional regular framework according to the fourth embodiment is formed of any one metal selected from the group consisting of aluminum or an aluminum alloy, aluminum or an aluminum alloy, copper or a copper alloy, stainless steel, and titanium or a titanium alloy, it is possible to provide an electrode having a three-dimensional regular framework that satisfies required characteristics such as electrical conductivity and corrosion resistance.

In addition, in the electrode 110 having a three-dimensional regular framework according to the fourth embodiment, when the current density during water electrolysis is 2.5 A/cm$^2$ or more, the electrode has excellent characteristics.

While the embodiments of the present invention have been described above, the present invention is not limited thereto, and can be appropriately modified without departing from the technical concept of the invention.

For example, in the present embodiment, the structure having the pores 11 extending in two directions, the Y-axis direction and the Z-axis direction, has been described, but the present invention is not limited thereto, the structure may have the pores 11 extending in three directions, the X-axis direction, the Y-axis direction, and the Z-axis direction, or may have the pores 11 extending in only one direction among the X-axis direction, the Y-axis direction, and the Z-axis direction.

In addition, in the present embodiment, the metal member having a three-dimensional regular framework structure with a roughly rectangular parallelepiped shape has been described, but the present invention is not limited thereto, and a metal member having a three-dimensional regular framework structure with another shape may be used.

[Examples]

Hereinafter, the results of confirmation experiments performed in order to confirm the effects of the present invention will be described.

(Examples 1 to 4 of present invention)

First, molding raw materials were prepared by sieving metal powders formed of metals shown in Table 1 so that the average particle size was 30 $\mu$m.

Using this molding raw material, a three-dimensional regular framework structure was laminated and formed by a binder jet type 3D printer (DM P2500 commercially available from Digital Metal), and the binder was cured at 250°C to obtain a molded component having a three-dimensional regular framework structure.

In Examples 1 to 4 of the present invention, in the pore rows adjacent to each other in the lamination direction (Z-axis direction) in this case, laminate forming was performed so that the phases of the pores and the frameworks in the X-axis direction matched.

The obtained molded component was subjected to a degreasing treatment (heating temperature: 400°C, holding time: 2 hours), and then subjected to a sintering treatment to produce a metal member having a three-dimensional regular framework structure. Here, in the case of aluminum powder, the sintering temperature was 650°C, and the holding time was 5 hours, in the case of copper power, the sintering temperature was 1,000°C, and the holding time was 5 hours, in the case of SUS powder, the sintering temperature was 1,300°C, and the holding time was 5 hours, and in the case of titanium powder, the sintering temperature was 1,200°C, and the holding time was 2 hours.

(Comparative Examples 1 to 3)

First, a titanium hydride powder having an average particle size of 15 μm and a pure titanium powder having an average particle size of 10 μm were prepared as raw material powders. In addition, methylcellulose was prepared as a water-soluble resin binder, neopentane, hexane and butane were prepared as organic solvents, glycerin and ethylene glycol were prepared as plasticizers, water was prepared as a solvent, and additionally, alkylbenzene sulfonate was prepared as a surfactant.

The titanium hydride powder prepared in advance, methylcellulose as a water-soluble resin binder, neopentane, hexane and heptane as organic solvents, glycerin and ethylene glycol as plasticizers, and water as a solvent were mixed, alkylbenzene sulfonate as a surfactant was added as necessary, and the mixture was kneaded for 15 minutes to prepare a titanium-containing slurry.

Using the obtained titanium-containing slurry, a slurry layer was molded on a zirconia plate by a doctor blade method with a blade gap of 0.4 mm.

This slurry layer that was placed on the zirconia plate was directly supplied to a high temperature and high humidity tank, foamed therein under conditions of a temperature of 40°C, a humidity of 90%, and a maintenance time of 20 minutes, and then dried with hot air under conditions of a temperature of 80°C and a maintenance time of 15 minutes to prepare a green sheet molded component.

Then, the green sheet molded component was degreased and sintered under conditions of 1,170°C and a maintenance time of 10 hours to obtain a porous titanium plate (metal member).

(Comparative Example 4)

A fiber sintered component (metal member) with a framework diameter of 20 μm, a porosity of 60%, and a thickness of 500 μm (commercially available product) was prepared.

(Framework and pore)

In the metal members having a three-dimensional regular framework structure of Examples 1 to 4 of the present invention, the framework diameter, the framework pitch, and the circle-equivalent diameter of the pores in a cross section perpendicular to the pore extension direction (first direction) were measured by an X-ray CT measurement (device name: SMX 1000, commercially available from Shimadzu Corporation).

Regarding data after the measurement, analysis software (VG studio max 3.2) was used to obtain 3D image data of the metal member. The 3D image data was cut out at 50 μm intervals in the thickness direction to obtain a 2D image (area with a range of 3.5 mm×3.5 mm), which was subjected to a binarization process (image analysis software WinROOF (commercially available from Mitani Corporation), was used, conditions of automatic binarization-discriminant analysis method-threshold value: 54-255 were specified, the degeneration process operation was performed twice, and measurement was performed), the framework part and the pore part of the metal member were separated, and the framework diameter, the framework pitch, and the circle-equivalent diameter of the pores were calculated.

(Porosity)

The porosity N of the metal members of Examples 1 to 4 of the present invention and Comparative Examples 1 to 4 was calculated as follows.

$$N(\%)=(1-(W/(V \times D_T))) \times 100$$

W: mass (g) of the metal member
V: volume (cm$^3$) of the metal member
$D_T$: true density (g/cm$^3$) of the metal constituting the metal member

(Pressure loss)

The pressure loss in the pore extension direction of the metal members of Examples 1 to 4 of the present invention and Comparative Examples 1 to 4 was evaluated as follows.

On a pressure loss measurement plate (80 mm square×thickness 15 mm) with dug grooves with a size of 40 mm×20 mm and a depth 0.2 mm, a metal member with a size of 40 mm×20 mm and a thickness of 0.2 mm (Examples 1 to 4 of the present invention and Comparative Examples 1 to 4) was placed. In addition, a fluorine rubber gasket (80 mm×80 mm, thickness 0.3 mm) with the center part cut out to a size of 40 mm×20 mm was placed as the outer frame of the metal member.

A metal plate with a size of 80 mm×80 mm was placed over the top, and a spring-loaded screw was used to apply a surface pressure of 0.25 MPa.

In the pressure loss measurement plate, a manifold with a depth of 10 mm was provided on both the left and right sides of the metal member. A fluororesin (PFA) tube with an inner diameter of φ4 mm was connected to the manifold to allow air to flow through the pressure loss measurement plate. The air flow rate was controlled by a mass flow meter. The pressure difference before and after the pressure loss measurement plate was measured by a digital differential pressure gauge (GC63 Nagano Keiki). Here, the air flow rate was 1.0 m/s.

[Table 1]

| | | Material | Porosity (%) | Framework diameter (μm) | Framework pitch (μm) | Circle-equivalent diameter of pore (μm) | Pressure loss (Pa) |
|---|---|---|---|---|---|---|---|
| Example of present invention | 1 | aluminum | 75 | 200 | 600 | 450 | 23578 |
| | 2 | copper | 50 | 50 | 100 | 50 | 9020 |
| | 3 | SUS | 95 | 200 | 1500 | 1500 | 3005 |
| | 4 | titanium | 85 | 200 | 800 | 700 | 885 |
| Comparative Example | 1 | aluminum | 30 | foam metal porous component | | | >100000 |
| | 2 | titanium | 70 | foam metal porous component | | | 59432 |
| | 3 | titanium | 80 | foam metal porous component | | | 30720 |
| | 4 | titanium | 80 | fiber sintered porous component | | | 94911 |

In Comparative Examples 1 to 3 in which the foam metal was used and Comparative Example 4 in which the fiber sintered component was used, the pressure loss was large. This is speculated to be due to the randomly arranged pores.

On the other hand, in Examples 1 to 4 of the present invention in which the pores extending in the first direction were provided, the pressure loss was sufficiently minimized.

Based on the above confirmation experiment results, it was confirmed that, according to examples of the present invention, it was possible to provide a metal member having a three-dimensional regular framework structure with a high porosity and a low pressure loss for a fluid that passes therethrough.

(Examples 11 to 14 of present invention and Comparative Example 15)

First, molding raw materials were prepared by sieving metal powders formed of metals shown in Table 2 so that the average particle size was 30 μm.

Using this molding raw material, a three-dimensional regular framework structure was laminated and formed by a binder jet type 3D printer (DM P2500 commercially available from Digital Metal), and the binder was cured at 250°C to obtain a molded component having a three-dimensional regular framework structure.

In Examples 11 to 14 of the present invention and Comparative Example 15, in this case, in the cross section perpendicular to the first direction (Y-axis direction), laminate forming was performed so that the phase shift (shift in the X-axis direction) D between the pores and the frameworks in the pore rows adjacent to each other in the lamination direction (Z-axis direction) was the value shown in Table 2.

The obtained molded component was subjected to a degreasing treatment (heating temperature: 400°C, holding time: 2 hours), and then subjected to a sintering treatment to produce a metal member having a three-dimensional regular framework structure. Here, in the case of aluminum powder, the sintering temperature was 650°C, and the holding time was 5 hours, in the case of copper power, the sintering temperature was 1,000°C, and the holding time was 5 hours, in the case of SUS powder, the sintering temperature was 1,300°C, and the holding time was 5 hours, and in the case of titanium powder, the sintering temperature was 1,200°C, and the holding time was 2 hours.

(Comparative Examples 11 to 13)

First, a titanium hydride powder having an average particle size of 15 μm and a pure titanium powder having an average particle size of 10 μm were prepared as raw material powders. In addition, methylcellulose was prepared as a water-soluble resin binder, neopentane, hexane and butane were prepared as organic solvents, glycerin and ethylene glycol were prepared as plasticizers, water was prepared as a solvent, and additionally, alkylbenzene sulfonate was prepared as a surfactant.

The titanium hydride powder prepared in advance, methylcellulose as a water-soluble resin binder, neopentane, hexane and heptane as organic solvents, glycerin and ethylene glycol as plasticizers, and water as a solvent were mixed, alkylbenzene sulfonate as a surfactant was added as necessary, and the mixture was kneaded for 15 minutes to prepare a titanium-containing slurry.

Using the obtained titanium-containing slurry, a slurry layer was molded on a zirconia plate by a doctor blade method with a blade gap of 0.4 mm.

This slurry layer that was placed on the zirconia plate was directly supplied to a high temperature and high humidity tank, foamed therein under conditions of a temperature of 40°C, a humidity of 90%, and a maintenance time of 20 minutes, and then dried with hot air under conditions of a temperature of 80°C and a maintenance time of 15 minutes to prepare a green sheet molded component.

Then, the green sheet molded component was degreased and sintered under conditions of 1,170°C and a maintenance time of 10 hours to obtain a porous titanium plate (metal member).

(Comparative Example 14)

A fiber sintered component (metal member) with a framework diameter of 20 $\mu$m, a porosity of 60%, and a thickness of 500 $\mu$m (commercially available product) was prepared.

(Framework and pore)

In the metal members having a three-dimensional regular framework structure of Examples 11 to 14 of the present invention and Comparative Example 15, the framework diameter, the framework pitch, and the circle-equivalent diameter of the pores in a cross section perpendicular to the pore extension direction (first direction) were measured by an X-ray CT measurement (device name: SMX 1000, commercially available from Shimadzu Corporation).

Regarding data after the measurement, analysis software (VG studio max 3.2) was used to obtain 3D image data of the metal member. The 3D image data was cut out at 50 $\mu$m intervals in the thickness direction to obtain a 2D image (area with a range of 3.5 mm×3.5 mm), which was subjected to a binarization process (image analysis software WinROOF (commercially available from Mitani Corporation), was used, conditions of automatic binarization→discriminant analysis method-threshold value: 54-255 were specified, the degeneration process operation was performed twice, and measurement was performed), the framework part and the pore part of the metal member were separated, and the circle-equivalent diameter of the framework, the framework pitch, and the circle-equivalent diameter of the pores were calculated.

The results are shown in Table 2.

(Porosity)

The porosity N of the metal members of Examples 11 to 14 of the present invention and Comparative Examples 11 to 15 was calculated in the same manner as in Examples 1 to 4 of the present invention. The results are shown in Table 2.

(Pressure loss)

The pressure loss in the pore extension direction of the metal members of Examples 11 to 14 of the present invention and Comparative Examples 11 to 15 was evaluated in the same method as in Examples 1 to 4 of the present invention. The results are shown in Table 2.

(Strain amount)

A sample cut to 20 mm×20 mm was placed on a compression measurement jig with a size of 80 mm×80 mm. This was placed in a compression measurement device (Techno Graph TG-20 kNB, commercially available from Minebea Co., Ltd.) with a capacity of 20 kN, and pressure was applied to the surface of the metal member in the vertical direction. The position coordinates in this case were measured using three linear gauges (AT-005V, commercially available from Keyence Corporation) and a controller (AT-V500), a compressive stress-strain curve (refer to FIG. 8) was obtained, and the amount of strain in the metal member when pressurized at 4 MPa was calculated. The results are shown in Table 2.

[Table 2]

| | | Material | Porosity (%) | Phase shift | Circle-equivalent diameter of framework (μm) | Framework pitch (μm) | Circle-equivalent diameter of pore (μm) | Pressure loss (Pa) | Amount of strain* (%) |
|---|---|---|---|---|---|---|---|---|---|
| Example of present invention | 11 | aluminum | 75 | $\pi/4$ | 200 | 600 | 450 | 25647 | 7.8 |
| | 12 | copper | 50 | $3\pi/4$ | 50 | 100 | 50 | 9830 | 1.0 |
| | 13 | SUS | 95 | $\pi/2$ | 200 | 1500 | 1500 | 3256 | 4.5 |
| | 14 | titanium | 85 | $2\pi/3$ | 200 | 800 | 700 | 930 | 1.5 |
| Comparative Example | 11 | aluminum | 30 | - | foam metal porous component | | | >100000 | 4.2 |
| | 12 | titanium | 70 | - | foam metal porous component | | | 59432 | 2.8 |
| | 13 | titanium | 80 | - | foam metal porous component | | | 30720 | 3.5 |
| | 14 | titanium | 80 | - | fiber sintered porous component | | | 94911 | 10.0 |
| | 15 | titanium | 85 | 0 | 200 | 800 | 700 | 889 | 0.5 |
| * Definition of amount of strain: the amount of strain at 4 MPa pressurized is defined as the amount of strain. | | | | | | | | | |

In Comparative Examples 11 to 13 in which the foam metal was used and Comparative Example 14 in which the fiber sintered component was used, the pressure loss was large. This is speculated to be due to the randomly arranged pores.

In addition, in Comparative Example 15 in which the pores extending in the first direction were provided, and the phases of the pores and the frameworks matched, the pressure loss was sufficiently low, and the amount of strain was small at 0.5%.

On the other hand, in Examples 11 to 14 of the present invention in which the pores extending in one direction were provided, the pressure loss was sufficiently low, and the amount of strain was sufficiently secured. Therefore, the contact resistance with other members was reduced and electrical conductivity and heat dissipation were excellent.

Based on the above confirmation experiment results, it was confirmed that, according to examples of the present invention, it was possible to provide a metal member having a three-dimensional regular framework structure with a high porosity, a low pressure loss for a fluid that passes therethrough, a large amount of strain when pressurized, and a low contact resistance with other members.

(Examples 21 to 25 of present invention)

First, molding raw materials were prepared by sieving metal powders formed of metals shown in Table 3 so that the average particle size was 30 μm.

Using this molding raw material, a well-shaped sheet layer and a pin structure layer were laminated and formed by a binder jet type 3D printer (DM P2500 commercially available from Digital Metal), and the binder was cured at 250°C to obtain a molded component having a three-dimensional regular framework structure.

The obtained molded component was subjected to a degreasing treatment (heating temperature: 400°C, holding time: 2 hours), and then subjected to a sintering treatment to produce an electrode having a three-dimensional regular framework. Here, in the case of aluminum powder, the sintering temperature was 650°C, and the holding time was 5 hours, in the case of copper power, the sintering temperature was 1,000°C, and the holding time was 5 hours, in the case of SUS powder, the sintering temperature was 1,300°C, and the holding time was 5 hours, and in the case of titanium powder, the sintering temperature was 1,200°C, and the holding time was 2 hours.

(Comparative Example 21)

First, a titanium hydride powder having an average particle size of 15 μm and a pure titanium powder having an average particle size of 10 μm were prepared as raw material powders. In addition, methylcellulose was prepared as a water-soluble resin binder, neopentane, hexane and butane were prepared as organic solvents, glycerin and ethylene glycol were prepared as plasticizers, water was prepared as a solvent, and additionally, alkylbenzene sulfonate was prepared as a surfactant.

The titanium hydride powder prepared in advance, methylcellulose as a water-soluble resin binder, neopentane, hexane and heptane as organic solvents, glycerin and ethylene glycol as plasticizers, and water as a solvent were mixed, alkylbenzene sulfonate as a surfactant was added as necessary, and the mixture was kneaded for 15 minutes to prepare a titanium-containing slurry.

Using the obtained titanium-containing slurry, a slurry layer was molded on a zirconia plate by a doctor blade method with a blade gap of 0.4 mm.

This slurry layer that was placed on the zirconia plate was directly supplied to a high temperature and high humidity tank, foamed therein under conditions of a temperature of 40°C, a humidity of 90%, and a maintenance time of 20 minutes, and then dried with hot air under conditions of a temperature of 80°C and a maintenance time of 15 minutes to prepare a green sheet molded component.

Then, the green sheet molded component was degreased and sintered under conditions of 1,170°C and a maintenance time of 10 hours to obtain a foam titanium sheet material.

(Comparative Example 22)

A fiber sintered component with a framework diameter of 20 $\mu$m, a porosity of 80%, and a thickness of 500 $\mu$m (commercially available product) was prepared.

(Porosity)

The porosity N of the well-shaped sheet layer and the pin structure layer of Examples 21 to 25 of the present invention and the porosity N of the sheet material of Comparative Examples 21 and 22 were calculated as follows. The results are shown in Table 3.

$$N(\%)=(1-(W/(V\times D_T)))\times 100$$

W: mass (g)
V: volume (cm$^3$)
$D_T$: true density (g/cm$^3$) of the constituting metal

(Framework diameter)

The framework diameter of the pin structure layer of Examples 21 to 25 of the present invention was measured by X-ray CT measurement (device name: SMX 1000, commercially available from Shimadzu Corporation). Regarding data after the measurement, analysis software (VG studio max 3.2) was used to obtain 3D image data of the pin structure layer. The 3D image data was cut out at 50 $\mu$m intervals in the thickness direction to obtain a 2D image (area with a range of 3.5 mm$\times$3.5 mm), which was subjected to a binarization process (image analysis software WinROOF (commercially available from Mitani Corporation), was used, conditions of automatic binarization→discriminant analysis method→threshold value: 54-255 were specified, the degeneration process operation was performed twice, and measurement was performed), and the framework diameter of the pin structure layer was calculated. The results are shown in Table 3.

(Thickness of well-shaped sheet layer, and thickness of pin structure layer)

Measurement and calculation were performed in the same method as in the framework diameter. The results are shown in Table 3.

(Number of pin members per unit area)

Measurement and calculation were performed in the same method as in the framework diameter. The results are shown in Table 3.

(Current density during water electrolysis)

For the electrodes of Examples 21 to 25 of the present invention and Comparative Examples 21 and 22, the current density during water electrolysis was evaluated as follows. The electrodes of Examples 21 to 25 of the present invention and Comparative Examples 21 and 22 were cut into 1 cm squares, and plated with Pt (plating thickness: 0.5 $\mu$m or more) by a physical vapor deposition method to form anode electrodes.

A carbon paper with a thickness of 300 $\mu$m was used as the cathode electrode. As the catalyst, an iridium oxide powder was used on the side of the anode, and a PtRu powder was used on the side of the cathode. Nafion115 (commercially available from DuPont) was used as the ion-exchange membrane.

Incorporation into a water electrolysis cell was performed under a condition of a cell fastening pressure of 2 MPa, pure water was shared, and the current density was measured under conditions of a temperature of 80°C and an electrolysis voltage of 2.5 V.

[Table 3]

| | | Material | Well-shaped sheet layer | | Pin structure | | | | Current density (A/cm$^2$) |
|---|---|---|---|---|---|---|---|---|---|
| | | | Porosity (%) | Thickness ($\mu$m) | Porosity (%) | Thickness (mm) | Framework diameter ($\mu$m) | Number of pins (pins/cm$^2$) | |
| Example of present invention | 21 | titanium | 20 | 200 | 94 | 2 | 200 | 150 | 5.7 |
| | 22 | titanium | 20 | 100 | 95 | 1 | 100 | 500 | 5.6 |
| | 23 | copper | 20 | 200 | 70 | 1 | 200 | 750 | 5.3 |
| | 24 | SUS | 20 | 200 | 98 | 1 | 50 | 1000 | 5.0 |
| | 25 | aluminum | 70 | 500 | 99 | 5 | 300 | 10 | 5.6 |
| Comparative Example | 21 | titanium | 85 | 2000 | foam titanium sheet material | | | | 4.3 |
| | 22 | titanium | 80 | 500 | sheet material of titanium fiber sintered component | | | | 4.0 |

In Comparative Example 21 in which the foam metal was used and Comparative Example 22 in which the fiber sintered component was used, the current density during electrolysis was reduced to 4.3 A/cm$^2$ and 4.0 A/cm$^2$.

On the other hand, in Examples 21 to 25 of the present invention in which the well-shaped sheet layer and the pin structure layer were laminated and formed, the current density during electrolysis was increased to 5.0 A/cm$^2$ or more.

Based on the above confirmation experiment results, it was confirmed that, according to examples of the present invention, it was possible to provide an electrode having a three-dimensional regular framework which has a low contact resistance with other members such as a catalyst layer, allows bubbles to be easily removed, and has excellent electrolysis efficiency

(Examples 31 to 35 of present invention)

First, molding raw materials were prepared by sieving metal powders formed of metals shown in Table 4 so that the average particle size was 30 $\mu$m.

Using this molding raw material, a well-shaped sheet layer and a rectangular parallelepiped lattice layer were laminated and formed by a binder jet type 3D printer (DM P2500 commercially available from Digital Metal), and the binder was cured at 250°C to obtain a molded component having a three-dimensional regular framework structure.

The obtained molded component was subjected to a degreasing treatment (heating temperature: 400°C, holding time: 2 hours), and then subjected to a sintering treatment to produce an electrode having a three-dimensional regular framework. Here, in the case of aluminum powder, the sintering temperature was 650°C, and the holding time was 5 hours, in the case of copper power, the sintering temperature was 1,000°C, and the holding time was 5 hours, in the case of SUS powder, the sintering temperature was 1,300°C, and the holding time was 5 hours, and in the case of titanium powder, the sintering temperature was 1,200°C, and the holding time was 2 hours.

(Comparative Example 31)

First, a titanium hydride powder having an average particle size of 15 $\mu$m and a pure titanium powder having an average particle size of 10 $\mu$m were prepared as raw material powders. In addition, methylcellulose was prepared as a water-soluble resin binder, neopentane, hexane and butane were prepared as organic solvents, glycerin and ethylene glycol were prepared as plasticizers, water was prepared as a solvent, and additionally, alkylbenzene sulfonate was prepared as a surfactant.

The titanium hydride powder prepared in advance, methylcellulose as a water-soluble resin binder, neopentane, hexane and heptane as organic solvents, glycerin and ethylene glycol as plasticizers, and water as a solvent were mixed, alkylbenzene sulfonate as a surfactant was added as necessary, and the mixture was kneaded for 15 minutes to prepare a titanium-containing slurry.

Using the obtained titanium-containing slurry, a slurry layer was molded on a zirconia plate by a doctor blade method with a blade gap of 0.4 mm.

This slurry layer that was placed on the zirconia plate was directly supplied to a high temperature and high humidity tank, foamed therein under conditions of a temperature of 40°C, a humidity of 90%, and a maintenance time of 20 minutes, and then dried with hot air under conditions of a temperature of 80°C and a maintenance time of 15 minutes to prepare a green sheet molded component.

Then, the green sheet molded component was degreased and sintered under conditions of 1,170°C and a maintenance time of 10 hours to obtain a foam titanium sheet material.

(Comparative Example 32)

A fiber sintered component with a framework diameter of 20 $\mu$m, a porosity of 80%, and a thickness of 500 $\mu$m (commercially available product) was prepared.

(Porosity)

The porosity N of the well-shaped sheet layer and the rectangular parallelepiped lattice layer of Examples 31 to 35 of the present invention, and the porosity N of the sheet material of Comparative Examples 31 and 32 were calculated as follows. The results are shown in Table 4.

$$N(\%)=(1-(W/(V \times D_T))) \times 100$$

W: mass (g)
V: volume (cm$^3$)
D$_T$: true density (g/cm$^3$) of the constituting metal

(Framework diameter, thickness, and framework pitch)

The framework diameter and the framework pitch of the rectangular parallelepiped lattice layers and the thicknesses of the well-shaped sheet layer and the rectangular parallelepiped lattice layer of Examples 31 to 35 of the present invention were measured by X-ray CT measurement (device name: SMX 1000, commercially available from Shimadzu Corporation).

Regarding data after the measurement, analysis software (VG studio max 3.2) was used to obtain 3D image data of the metal member. The 3D image data was cut out at 50 $\mu$m intervals in the thickness direction to obtain a 2D image (area with a range of 3.5 mm×3.5 mm), which was subjected to a binarization process (image analysis software WinROOF (commercially available from Mitani Corporation), was used, conditions of automatic binarization-discriminant analysis method→threshold value: 54-255 were specified, the degeneration process operation was performed twice, and measurement was performed), and the framework diameter and the framework pitch and the thicknesses of the well-shaped sheet layer and the rectangular parallelepiped lattice layer of the metal members were calculated. The results are shown in Table 4.

(Current density during water electrolysis)

For the electrodes of Examples 31 to 35 of the present invention and Comparative Examples 31 and 32, the current density during water electrolysis was evaluated in the same method as in Examples 21 to 25 of the present invention and Comparative Examples 21 and 22.

The results are shown in Table 4.

EP 4 582 197 A1

[Table 4]

| | | Material | Well-shaped sheet layer | | Rectangular parallelepiped lattice layer | | | | Current density (A/cm$^2$) |
|---|---|---|---|---|---|---|---|---|---|
| | | | Porosity (%) | Thickness ($\mu$m) | Porosity (%) | Thickness (mm) | Framework diameter ($\mu$m) | Framework pitch ($\mu$m) | |
| Example of present invention | 31 | titanium | 20 | 200 | 96 | 2000 | 1000 | 5000 | 2.7 |
| | 32 | titanium | 20 | 100 | 89 | 1000 | 600 | 1800 | 2.7 |
| | 33 | copper | 20 | 200 | 75 | 100 | 50 | 100 | 2.6 |
| | 34 | SUS | 20 | 200 | 96 | 1000 | 500 | 2500 | 2.7 |
| | 35 | aluminum | 70 | 500 | 70 | 5000 | 550 | 1000 | 2.6 |
| Comparative Example | 31 | titanium | 85 | 2000 | foam titanium sheet material | | | | 2.4 |
| | 32 | titanium | 80 | 500 | sheet material of titanium fiber sintered component | | | | 2.4 |

In Comparative Example 31 in which the foam metal was used and Comparative Example 32 in which the fiber sintered component was used, the current density during water electrolysis was reduced to 2.4 A/cm$^2$.

On the other hand, in Examples 31 to 35 of the present invention in which the well-shaped sheet layer and the rectangular parallelepiped lattice layer were laminated and formed, the current density during water electrolysis was increased to 2.5 A/cm$^2$ or more.

Based on the above confirmation experiment results, it was confirmed that, according to examples of the present invention, it was possible to provide an electrode having a three-dimensional regular framework which has a low contact resistance with other members such as a catalyst layer, allows bubbles to be easily removed, and has excellent electrolysis efficiency.

REFERENCE SIGNS LIST

10 Metal member having three-dimensional regular framework structure
11 Pore
12 Framework
15 Pore row
110 Electrode having three-dimensional regular framework
111 Well-shaped sheet layer
115 Pin structure layer
116 Pin member
117 Rectangular parallelepiped lattice layer

Claims

1. A metal member having a three-dimensional regular framework structure with a porosity in a range of 50% or more and 95% or less,

   wherein the three-dimensional regular framework structure has a framework and a plurality of pores extending in a first direction,
   in a cross section perpendicular to the first direction, pore rows in which the pores and the frameworks are alternately arranged are periodically laminated to form a lamination structure, and
   in the pore rows adjacent to each other in a lamination direction, the phases of the pores and the frameworks match.

2. A metal member having a three-dimensional regular framework structure with a porosity in a range of 50% or more and 95% or less,

wherein the three-dimensional regular framework structure has a framework and a plurality of pores extending in a first direction,

in a cross section perpendicular to the first direction, pore rows in which the pores and the frameworks are alternately arranged are periodically laminated to form a lamination structure, and

in the pore rows adjacent to each other in a lamination direction, the phases of the pores and the frameworks are shifted.

3. The metal member having a three-dimensional regular framework structure according to claim 2, wherein the phase shift is in a range of $\pi/4$ or more and $3\pi/4$ or less.

4. The metal member having a three-dimensional regular framework structure according to claim 2, wherein the amount of strain when pressurized at 4 MPa is 1.0% or more.

5. The metal member having a three-dimensional regular framework structure according to claim 1 or 2, wherein, in a cross section perpendicular to the first direction, the circle-equivalent diameter of the pores is in a range of 50 $\mu$m or more and 1,500 $\mu$m or less.

6. The metal member having a three-dimensional regular framework structure according to claim 1 or 2, wherein, in a cross section perpendicular to the first direction, the circle-equivalent diameter of the framework is in a range of 50 $\mu$m or more and 200 $\mu$m or less.

7. The metal member having a three-dimensional regular framework structure according to claim 1 or 2, wherein, in a cross section perpendicular to the first direction, the framework pitch in the pore rows is in a range of 100 $\mu$m or more and 1,500 $\mu$m or less.

8. The metal member having a three-dimensional regular framework structure according to claim 1 or 2, wherein the air pressure loss in the first direction is 30,000 Pa or less.

9. The metal member having a three-dimensional regular framework structure according to claim 1 or 2, wherein the metal member is formed of any one metal selected from a group consisting of aluminum or an aluminum alloy, copper or a copper alloy, stainless steel, and titanium or a titanium alloy.

10. A water electrolysis device comprising:
an electrode composed of the metal member having the three-dimensional regular framework structure according to any one of claims 1 to 9.

11. A fuel cell comprising an electrode formed of the metal member having a three-dimensional regular framework structure according to any one of claims 1 to 10.

12. An electrode having a three-dimensional regular framework, comprising:

a well-shaped sheet layer having a plurality of through-holes in a thickness direction; and
a pin structure layer composed of a plurality of pin members erected from the well-shaped sheet layer,
wherein the porosity of the well-shaped sheet layer is in a range of 20% or more and 70% or less, and the porosity of the pin structure layer is in a range of 70% or more and 99% or less, and
the thickness of the well-shaped sheet layer is in a range of 10 $\mu$m or more and 500 $\mu$m or less, and the thickness of the pin structure layer is in a range of 100 $\mu$m or more and 5,000 $\mu$m or less.

13. The electrode having a three-dimensional regular framework according to claim 12, wherein the framework diameter is in a range of 50 $\mu$m or more and 300 $\mu$m or less, and the number of pin members per unit area in the pin structure layer is in a range of 10/cm$^2$ or more and 1,000/cm$^2$ or less.

14. The electrode having a three-dimensional regular framework according to claim 12, wherein the electrode is formed of any one metal selected from a group consisting of aluminum or an aluminum alloy, copper or a copper alloy, stainless steel, and titanium or a titanium alloy.

15. The electrode having a three-dimensional regular framework according to claim 12, wherein the current density during water electrolysis is 5.0 A/cm$^2$ or more.

16. An electrode having a three-dimensional regular framework, comprising:

a well-shaped sheet layer having a plurality of through-holes in a thickness direction; and
a rectangular parallelepiped lattice layer laminated in the thickness direction of the well-shaped sheet layer,
wherein the porosity of the well-shaped sheet layer is in a range of 20% or more and 70% or less, and the porosity of the rectangular parallelepiped lattice layer is in a range of 70% or more and 99% or less, and
the thickness of the well-shaped sheet layer is in a range of 10 $\mu$m or more and 500 $\mu$m or less, and the thickness of the rectangular parallelepiped lattice layer is in a range of 100 $\mu$m or more and 5,000 $\mu$m or less.

17. The electrode having a three-dimensional regular framework according to claim 16,
wherein, in the rectangular parallelepiped lattice layer, the framework diameter is in a range of 50 $\mu$m or more and 1,000 $\mu$m or less, and the framework pitch is in a range of 100 $\mu$m or more and 5,000 $\mu$m or less.

18. The electrode having a three-dimensional regular framework according to claim 16,
wherein the electrode is formed of any one metal selected from a group consisting of aluminum or an aluminum alloy, copper or a copper alloy, stainless steel, and titanium or a titanium alloy.

19. The electrode having a three-dimensional regular framework according to claim 16,
wherein the current density during water electrolysis is 2.5 A/cm$^2$ or more.

20. A water electrolysis device comprising:
the electrode having a three-dimensional regular framework according to any one of claims 12 to 19.

21. A fuel cell comprising:
the electrode having a three-dimensional regular framework according to any one of claims 12 to 19.

FIG. 1

FIG. 2

FIG. 3

FIG. 4

FIG. 5

FIG. 6

## FIG. 7

```
                                           ┌─S01
   ┌─────────────────────────────────────┐
   │   METAL POWDER PREPARING STEP       │
   └─────────────────────────────────────┘
                     │
                     ▼                     ┌─S02
   ┌─────────────────────────────────────┐
   │      LAMINATE MOLDING STEP          │
   └─────────────────────────────────────┘
                     │
                     ▼                     ┌─S03
   ┌─────────────────────────────────────┐
   │        DEGREASING STEP              │
   └─────────────────────────────────────┘
                     │
                     ▼                     ┌─S04
   ┌─────────────────────────────────────┐
   │        SINTERING STEP               │
   └─────────────────────────────────────┘
                     │
                     ▼
  ╭─────────────────────────────────────────╮
  │ METAL MEMBER HAVING THREE-DIMENSIONAL    │
  │     REGULAR FRAMEWORK STRUCTURE          │
  ╰─────────────────────────────────────────╯
```

## FIG. 8

FIG. 9

```
┌─────────────────────────────────┐
│  METAL POWDER PREPARING STEP    │ ─── S11
└─────────────────────────────────┘
                 │
                 ▼
┌─────────────────────────────────┐
│      LAMINATE MOLDING STEP      │ ─── S12
└─────────────────────────────────┘
                 │
                 ▼
┌─────────────────────────────────┐
│        DEGREASING STEP          │ ─── S13
└─────────────────────────────────┘
                 │
                 ▼
┌─────────────────────────────────┐
│        SINTERING STEP           │ ─── S14
└─────────────────────────────────┘
                 │
                 ▼
      ╭─────────────────────────╮
      │     ELECTRODE HAVING    │
      │ THREE-DIMENSIONAL REGULAR│
      │        FRAMEWORK         │
      ╰─────────────────────────╯
```

## INTERNATIONAL SEARCH REPORT

| International application No. |
|---|
| **PCT/JP2023/032127** |

| A. | CLASSIFICATION OF SUBJECT MATTER |
|---|---|

*B22F 5/10*(2006.01)i; *B22F 1/00*(2022.01)i; *B22F 3/11*(2006.01)i; *B22F 5/00*(2006.01)i; *B22F 10/10*(2021.01)i; *C25B 1/04*(2021.01)i; *C25B 9/00*(2021.01)i; *C25B 11/03*(2021.01)i; *C25B 11/042*(2021.01)i; *C25B 11/046*(2021.01)i; *H01G 9/052*(2006.01)i; *H01G 11/68*(2013.01)i; *H01G 11/70*(2013.01)i; *H01M 4/02*(2006.01)i; *H01M 4/13*(2010.01)i; *H01M 4/66*(2006.01)i; *H01M 4/80*(2006.01)i; *H01M 4/86*(2006.01)i; *H01M 8/0232*(2016.01)i; *H01M 8/10*(2016.01)i
FI: B22F5/10; B22F1/00 L; B22F1/00 N; B22F1/00 R; B22F1/00 T; B22F3/11 Z; B22F5/00 K; B22F10/10; C25B1/04; C25B9/00 A; C25B11/03; C25B11/042; C25B11/046; H01G9/052 500; H01G11/68; H01G11/70; H01M4/02 Z; H01M4/13; H01M4/66 A; H01M4/80 C; H01M4/86 B; H01M4/86 M; H01M8/0232; H01M8/10 101

According to International Patent Classification (IPC) or to both national classification and IPC

| B. | FIELDS SEARCHED |
|---|---|

Minimum documentation searched (classification system followed by classification symbols)

B22F5/10; B22F1/00; B22F3/11; B22F5/00; B22F10/10; C25B1/04; C25B9/00; C25B11/03; C25B11/042; C25B11/046; H01G9/052; H01G11/68; H01G11/70; H01M4/02; H01M4/13; H01M4/66; H01M4/80; H01M4/86; H01M8/0232; H01M8/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113290242 A (HUAZHONG UNIVERSITY OF SCIENCE AND TECHNOLOGY) 24 August 2021 (2021-08-24) paragraphs [0029], [0066]-[0084], fig. 3 | 1, 5-10 |
| A | | 2-4, 11-21 |
| X | CN 114806133 A (INSTITUTE OF METAL RESEARCH, CHINESE ACADEMY OF SCIENCES) 29 July 2022 (2022-07-29) paragraphs [0005]-[0009], [0016]-[0017], [0031], [0034], [0036], [0048]-[0049], fig. 2, 5, 7 | 1, 5-9 |
| X | JP 2018-147997 A (OSAKA RES INST IND SCIENCE & TECH) 20 September 2018 (2018-09-20) paragraphs [0007]-[0020], [0045], [0049], [0053], fig. 1-14 | 1, 5-9 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 October 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/032127** |

### C. DOCUMENTS CONSIDERED TO BE RELEVANT

| Category* | Citation of document, with indication, where appropriate, of the relevant passages | Relevant to claim No. |
| --- | --- | --- |
| X | US 2020/0112030 A1 (CARNEGIE MELLON UNIVERSITY) 09 April 2020 (2020-04-09) paragraphs [0006], [0010]-[0013], [0017], [0033]-[0035], [0037], [0045], [0049]-[0050], fig. 1-5, 9 | 1, 5-9, 11 |

Form PCT/ISA/210 (second sheet) (January 2015)

INTERNATIONAL SEARCH REPORT
Information on patent family members

International application No.

**PCT/JP2023/032127**

| Patent document cited in search report | | | Publication date (day/month/year) | Patent family member(s) | Publication date (day/month/year) |
|---|---|---|---|---|---|
| CN | 113290242 | A | 24 August 2021 | (Family: none) | |
| CN | 114806133 | A | 29 July 2022 | (Family: none) | |
| JP | 2018-147997 | A | 20 September 2018 | (Family: none) | |
| US | 2020/0112030 | A1 | 09 April 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022139721 A
- JP 2022139722 A
- JP 2022140184 A
- JP 2022140190 A
- JP 6485967 B
- JP 2006138005 A
- JP 2021108250 A
- JP 2021108251 A
- JP 2019137891 A